# FASCICULE DE BREVET EUROPEEN

(11) **EP 2 380 426 B1**
(45) Date de publication et mention de la délivrance du brevet: **22.07.2015**
(21) Numéro de dépôt: 11358003.9
(22) Date de dépôt: 18.04.2011
(51) Int. Cl.: A01D 34/416, A01D 34/73

(54) **Tête de coupe rotative multifonction, pour appareils de coupe, et appareils portables munis d'une telle tête de coupe.**
Rotierender Multifunktions-Schneidekopf für Schneidegeräte, und mit einem solchen Schneidekopf ausgestattete tragbare Geräte
Multifunctional rotary cutting head for cutting devices, and portable devices provided with such a cutting head.

(30) Priorité: 21.04.2010 FR 1001689
(43) Date de publication de la demande: 26.10.2011
(73) Titulaire: Pellenc SA, 84120 Pertuis (FR)
(72) Inventeur: Pellenc, Roger, 841290 Pertuis (FR)
(74) Mandataire: Marek, Pierre

(56) Documents cités:
- FR-A1- 2 712 136
- US-A- 4 790 071
- US-B1- 6 298 642

## Description

La présente invention concerne une tête de coupe rotative multifonction. Elle est plus particulièrement destinée à l'équipement d'appareils de coupe portables tels que coupe-bordure encore appelé coupe-herbe ou taille-herbe, débroussailleuses ou faux à moteur, taille-haie ou analogue. Une tête de coupe rotative multifonction est connue par le document US 4, 790, 071 A.

Généralement, il est courant de classer sous le nom de coupe-bordure ou taille-herbe, les appareils dont la fonction d'usage est de couper du gazon ou des herbes présentant une faible résistance. Les têtes de coupe utilisées pour cet usage sont généralement du genre dont les éléments coupants sont constitués par des brins de fil flexible de matière plastique, par exemple des brins de fil « Nylon ». D'autre part, les appareils dont la fonction d'usage est de couper des végétaux déjà lignifiés (petites broussailles, repousses d'arbres ou d'arbrisseaux, grandes herbes, haies, ...) sont plutôt appelés débroussailleuses, taille-haie, et leur tête de coupe utilise des lames rotatives métalliques ou en matière plastique dure. A titre d'exemples, on signale, par exemple, les documents US-2001/0023542, US-6401344, US-6944956, WO-2004/064489, WO-2005/032237, WO-2006/017372, WO-2008/139246, FR-2888085, qui décrivent différents agencements possibles de têtes de coupe utilisant des éléments de coupe constitués par des brins de fils de coupe flexibles. Des exemples de têtes de coupe utilisant des lames métalliques coupantes sont par exemple décrits dans le document WO-2007/099443.

Ces têtes de coupe sont montées à l'extrémité distale d'un manche équipé d'une poignée en U ou poignée double de guidage et de commande du moteur d'entraînement en rotation desdites têtes de coupe, ainsi que d'un anneau pour la fixation d'un harnais de portage.

Les appareils de coupe portables actuellement disponibles sur le marché sont, soit conçus pour n'utiliser qu'un seul type de moyen de coupe, soit, dans un souci de polyvalence, certaines machines prévoient pour chacun de ces types d'éléments une tête spécifique interchangeable : une pour fil, une pour lame métallique, etc.

Si l'on veut passer d'un type à l'autre, il est nécessaire de démonter tout ou partie du support de l'un pour le remplacer par tout ou partie du support de l'autre. Ces deux types de support nécessitent un démontage et l'utilisation d'un ou plusieurs outils. Cette situation a encore pour inconvénients :
- la nécessité d'une formation de l'utilisateur au démontage (souvent pas à gauche) / démontage et remontage des supports d'outil de coupe, nécessitant l'utilisation d'outils de coupe que l'on doit avoir en permanence à portée de main.
- Perte de temps et risque de blessure ; pertes de pièces lors du démontage et remontage.

Il arrive fréquemment qu'en raison de la situation des surfaces sur lesquelles des travaux de tonte ou de débroussaillage à réaliser, les utilisateurs sont amenés à acquérir un appareil à fils pour la coupe des herbes tendres (par exemple, surfaces entourant des arbres, ou situées à proximité d'obstacles durs tels que bordures de murs, ou d'allées, ou de massifs, etc.) et un appareil à lame pour le débroussaillage dans des herbes hautes et dures, ou dans des végétaux ligneux (ronces, fougères, ...), ou dans des taillis, ou pour la taille des haies ou le dépressage d'arbrisseaux. On conçoit que cette situation entraîne une augmentation des dépenses d'acquisition et d'initiation des matériels de coupe.

Pour palier les inconvénients des appareils du genre susmentionné, dédiés à des travaux de coupe spécifiques, on a proposé dans le document WO-2007/099443, un outil pour une débroussailleuse d'arbustes, à double action, pour une coupe combinée de l'herbe et des arbustes, cet outil étant constitué d'une lame d'une forme rectangulaire munie d'un trou central à des fins de connexion sur une tête de rotation d'un râteau débroussailleur d'arbustes, et de matériaux appropriés à leur tour munis d'une paire de trous cylindriques traversants à des fins d'insertion de petits fils en Nylon ou autre matière plastique résistante. Cet outil permet de couper en même temps l'herbe et les arbustes, en évitant des opérations de montage et de démontage de la lame, et également une désintégration efficace de ceux-ci.

Cet outil n'est pas polyvalent dans la mesure où, s'il permet de couper simultanément de l'herbe et des petits bois afin de procéder à un émiettement des parties coupées, il ne permet pas d'équiper un coupe-bordure ou un coupe herbe appelé à travailler à proximité d'obstacles durs.

Un objet de l'invention est de remédier aux inconvénients précédemment soulignés des appareils de coupe portables du genre coupe-bordure ou débroussailleuse.

Selon l'exemple décrit la tête de coupe selon l'invention est notamment remarquable en ce qu'elle comprend un boîtier rotatif constitué d'au moins deux parties, soit une partie supérieure et une partie inférieure assemblée à la base de ladite partie supérieure, et dans lequel est logé, avec une aptitude de translation axiale d'amplitude limitée, un support d'élément(s) ou outil(s) de coupe traversé par un arbre axial d'entraînement solidaire en rotation dudit support et dont la partie supérieure est agencée pour permettre son accouplement au moteur d'un appareil de coupe portable, ledit support d'élément(s) ou outil(s) de coupe étant monté avec une possibilité de mouvement axial d'amplitude limitée sur ledit arbre axial d'entraînement, ledit support d'élément(s) ou outil(s) de coupe étant pourvu de deux étages pour le montage sélectif de ces derniers, à savoir :
- un premier étage agencé pour le montage de brins de fil de coupe, et,
- un deuxième étage agencé pour le montage d'une lame de coupe interchangeable,

Selon un mode d'exécution préféré ledit support d'élément(s) ou outil(s) de coupe est pourvu de deux étages pour le montage sélectif de ces derniers, à savoir :
- un premier étage supérieur agencé pour le montage de brins de fil de coupe, et,
- un deuxième étage inférieur agencé pour le montage d'une lame de coupe interchangeable.

La tête de coupe comprend des moyens de blocage ou de désaccouplement du ou des éléments de coupe sélectionné(s) conformés de sorte que l'application simultanée de mouvements axiaux relatifs de sens contraire audit boîtier extérieur et audit support d'élément(s) ou outil(s) de coupe, entraîne : - soit le placement de l'étage correspondant au type d'élément(s) de coupe choisi dans une position permettant le positionnement ou le retrait dudit élément ; - soit le blocage de ce(s) dernier(s) sur l'étage dudit support correspondant au type d'éléments de coupe choisi.

Selon un mode d'exécution préféré et avantageux, le boîtier extérieur et le support d'éléments ou outil de coupe sont agencés de sorte que l'application simultanée de mouvement(s) axiaux convergents audit boîtier et audit support logé à l'intérieur de ce dernier, est utilisée pour permettre le placement de l'étage correspondant au type d'éléments de coupe choisi dans une position permettant le positionnement ou le retrait desdits élément(s) de coupe, tandis que l'application simultanée de mouvements axiaux divergents audit boîtier et audit support, permet le blocage automatique desdits éléments de coupe sur l'étage du support correspondant au type d'éléments de coupe choisi.

Selon une autre disposition caractéristique, les mouvements axiaux relatifs convergents du boîtier extérieur et du support d'élément(s) ou outil(s) de coupe sont obtenus automatiquement sous l'action d'un moyen élastique de rappel, de sorte à permettre le blocage automatique des éléments ou outils de coupe après leur positionnement dans la tête de coupe.

Selon un mode d'exécution préféré, le moyen élastique de rappel est constitué par un ressort agissant en compression et interposé entre un cloisonnement intérieur du boîtier extérieur et le support d'élément(s) ou outil(s) de coupe intérieur.

Selon une autre disposition caractéristique, l'étage supérieur du support d'élément(s) ou outil(s) de coupe comprend un mécanisme de serrage des brins de coupe engagés à l'intérieur du boîtier extérieur de la tête de coupe, au travers d'orifices ménagés dans la paroi latérale de celui-ci, solidaire en rotation dudit support de mécanisme de serrage comporte des cames de pinçage montées avec une aptitude de pivotement dans des plans parallèles entre eux et à l'axe de rotation de la tête de coupe, ce support d'éléments ou outils de coupe est monté avec une aptitude de translation axiale d'amplitude limitée dans le boîtier extérieur de la tête de coupe, ce dernier et le support du mécanisme de serrage étant agencés complémentairement, de sorte que l'application simultanée de mouvements axiaux convergents audit boîtier et audit support est utilisée pour permettre de soulever les cames de pinçage de manière à autoriser l'introduction, le coulissement ou le positionnement des brins de coupe à l'intérieur de la tête de coupe, tandis que l'application simultanée de mouvements axiaux divergents audit boîtier et audit support, permet de rabaisser lesdites cames afin de réaliser le blocage en position active des brins de coupe dans la tête de coupe.

Selon une autre disposition caractéristique, le mécanisme de serrage comprend deux couloirs de guidage et de positionnement des brins de coupe, disposés parallèlement, de part et d'autre de l'axe de rotation de la tête de coupe en face des ouvertures du boîtier extérieur, une portion d'entrée de chacun de ces couloirs est découverte et une came pivotante est montée en regard de cette portion découverte, cette came étant soumise à l'action d'un ressort tendant à appliquer sa surface de pincement en direction de ladite portion découverte, de sorte à presser fortement le brin de coupe engagé dans le couloir de positionnement contre le fond de ce dernier, en assurant ainsi le blocage dudit brin de coupe, le boîtier est muni intérieurement de doigts de poussée solidaires d'un cloisonnement supérieur dudit boîtier et permettant de repousser et de faire pivoter la came, afin de supprimer la pression de celle-ci sur le brin de coupe, lorsque le boîtier extérieur et le support du mécanisme de serrage sont soumis à des forces de pression convergente tendant à rapprocher le cloisonnement supérieur dudit boîtier extérieur et la face supérieure du support du mécanisme de serrage.

Selon une autre disposition caractéristique, la lame de coupe est insérée de manière amovible entre les parties supérieure et inférieure du boîtier. Suivant le mode d'exécution intéressant représenté :
- l'étage inférieur du support d'éléments ou d'outils de coupe est constitué par un support de lame, ce support de lame et la lame de coupe étant pourvus de moyens complémentaires de positionnement et d'accouplement en rotation de cette dernière, ces moyens pouvant être désaccouplés, à partir de leur position active par l'application manuelle simultanée, audit boîtier et audit support de lame, de mouvements axiaux relatifs convergents ;
- des moyens complémentaires assurent le blocage axial de la lame de coupe sur la portion distale de l'arbre d'entraînement ;
- un moyen d'accouplement permet une liaison en rotation automatique du support de lame et de la lame lorsqu'une lame est positionnée sur ledit support de lame.

Selon une autre disposition caractéristique, la partie centrale de la lame comporte :
- d'une part, une ouverture centrale pour le passage de l'axe d'entraînement, deux orifices d'accouplement disposés de part et d'autre dudit axe central, deux découpures présentant un bord extérieur courbe et ;
- d'autre part, des parties pleines permettant l'enfoncement de la lame sur la partie distale de l'arbre de rotation, jusqu'à sa position de verrouillage.

Selon un autre mode de réalisation avantageux, le support de lame et la partie centrale de la lame sont agencés de sorte à permettre l'installation de ladite lame sur ledit support de lame par un mouvement axial relatif convergent de ces derniers, suivi d'un mouvement de rotation de la lame ; l'enlèvement de la lame s'opérant par des mouvements inverses.

Selon un autre mode de réalisation, les moyens de positionnement et d'accouplement de la lame de coupe au support de lame comprennent, d'une part, deux plots d'accouplement disposés en sous-face dudit support de lame, de part et d'autre de l'ouverture axiale ménagée dans ce dernier et, d'autre part, deux orifices pratiqués de part et d'autre de l'ouverture axiale de la lame dans lequel est engagée la portion distale de l'arbre d'entraînement.

Selon un autre mode de réalisation préférée, l'accouplement en rotation du support de lame intérieur et du boîtier extérieur est réalisé au moyen de doigts d'entraînement solidaires de la face interne d'une cloison supérieure du boîtier et orientés parallèlement à l'axe de rotation de la tête de coupe, vers l'intérieur de celle-ci, ces doigts d'entraînement étant engagés avec une aptitude de glissement dans des rainures ménagées dans le support de lame.

Selon un autre mode d'exécution, les rainures d'accouplement sont ménagées dans au moins deux côtés opposés du support de lame.

Suivant une autre disposition caractéristique, l'arbre d'entraînement traverse un passage axial ménagé dans le support de lame, et la portion traversante de l'arbre et ledit passage axial présentent un profil complémentaire adapté pour permettre l'entraînement en rotation dudit support.

Selon un mode de réalisation préféré, ladite tête de coupe comporte des moyens pour limiter l'amplitude de la translation axiale du support de lame sur la portion traversante de l'arbre d'entraînement.

Selon une autre disposition caractéristique, la tête de coupe comprend des moyens de blocage du support de lame sur l'arbre d'entraînement.

Selon un mode de réalisation préféré, les moyens permettant le blocage axial de la lame de coupe sur l'arbre d'entraînement comprennent, d'une part, une ouverture axiale que présente la lame de coupe et, d'autre part, une rainure annulaire que comporte la portion distale de l'arbre d'entraînement, à distance de son extrémité, la portion extrême dudit arbre d'entraînement présentant à partir de ladite rainure une forme circulaire munie de deux gorges longitudinales femelles diamétralement opposées, tandis que l'ouverture axiale de la lame de coupe présente une forme mâle identique à celle du profil de ladite portion extrême.

Selon une autre disposition caractéristique, le bord inférieur de la partie supérieure du boîtier et la lame de coupe son pourvus de moyens complémentaires de positionnement.

Selon un mode d'exécution préféré, les moyens complémentaires de positionnement du boîtier et de la lame de coupe comprennent, d'une part, deux lumières délimitées par un bord externe arqué et disposées de part et d'autre et à égale distance de l'alignement diamétral d'ouvertures que présente la lame et, d'autre part, des taquets de guidage et d'arrêt, diamétralement opposés, dont est munie la base de ladite partie supérieure ; l'une au moins des extrémités desdites lumières se prolongeant par une entaille.

Selon une autre disposition caractéristique, la partie basse de la paroi latérale du boîtier et la partie supérieure circulaire du bol glisseur sont munies de moyens de retenue complémentaires dont l'assemblage nécessite seulement un mouvement axial relatif des deux pièces, suivi d'un mouvement de rotation d'amplitude limitée permettant de mettre en prise les organes complémentaires desdits moyens de retenue.

Selon une autre disposition caractéristique, les moyens de retenue du boîtier et du bol comprennent, d'une part, au voisinage et le long du bord inférieur circulaire de la surface interne de la paroi latérale cylindrique du boîtier, au moins deux épaulements arrondis diamétralement opposés, et, d'autre part, au moins deux pattes d'accrochage diamétralement opposées s'étendant parallèlement à l'axe du bol glisseur et dont l'extrémité libre est munie d'un bec ou ergot de verrouillage orienté en direction de cet axe.

De manière préférée, la tête de coupe comprend une butée disposée à l'une des extrémités de chaque épaulement, limitant le mouvement rotatif des becs ou ergots de verrouillage lors de la mise en place du bol glisseur dans la position d'assemblage.

Selon une autre disposition avantageuse, le bord du bec et l'épaulement arrondi des becs sont munis de moyens complémentaires de verrouillage en fin de mouvement de rotation, lors de l'assemblage des parties du boîtier.

Selon un mode d'exécution préféré, les moyens complémentaires de verrouillage de la partie inférieure sur la partie supérieure du boîtier sont constitués par un téton que présente la face supérieure des épaulements et par une encoche prévue dans le bord extérieur du bec, dans laquelle s'engage automatiquement ledit téton de verrouillage en fin du mouvement rotatif d'assemblage.

L'appareil de coupe portable selon l'invention, tel que coupe herbe, ou coupe bordure, ou débroussailleuse, ou faux à moteur, ou taille haie,... est remarquable et avantageux en ce qu'il est équipé d'une tête de coupe rotative utilisant des brins flexibles de fil de coupe ou des lames de coupe comportant les caractéristiques susmentionnées, en fonction des travaux à effectuer.

Les buts, caractéristiques et avantages ci-dessus, et d'autres encore, ressortiront mieux de la description détaillée qui suit et des dessins annexés dans lesquels :
La figure 1A est une vue en perspective d'une tête de coupe selon l'invention munie de brins de fil flexibles de coupe, et pouvant être équipée d'une lame de coupe.
La figure 1B est une vue en perspective d'une tête de coupe selon l'invention munie d'une lame de coupe, et pouvant être munie de brins de fil flexibles de coupe.

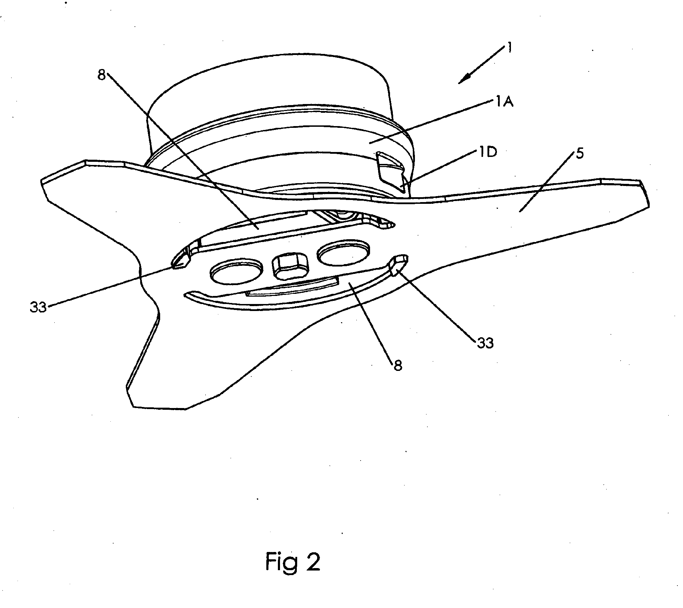

La figure 2 est une vue en perspective d'une tête de coupe équipée d'une lame de coupe interchangeable, selon l'invention, le bol glisseur étant enlevé.
La figure 3Aa est une vue de face d'une tête de coupe munie de brins de fil de coupe, en position déverrouillée.
La figure 3Ab est une vue de face d'une tête de coupe munie d'une lame de coupe, en position verrouillée.
La figure 3Ba est une vue en coupe selon la ligne Ea-Ea de la figure 3Aa.
La figure 3Bb est une vue en coupe selon la ligne Eb-Eb de la figure 3Ab.
La figure 3Ca est une vue en coupe selon la ligne La-La de la figure 3Ba.
La figure 3Cb est une vue en coupe selon la ligne Lb-Lb de la figure 3Bb.
La figure 3Da est une vue en en coupe selon la ligne Ka-Ka de la figure 3Ba.
La figure 3Db est une vue en coupe selon la ligne Kb-Kb de la figure 3Bb.
La figure 3E est une vue de dessous et en coupe selon la ligne R-R de la figure 3Ba (position déverrouillée).

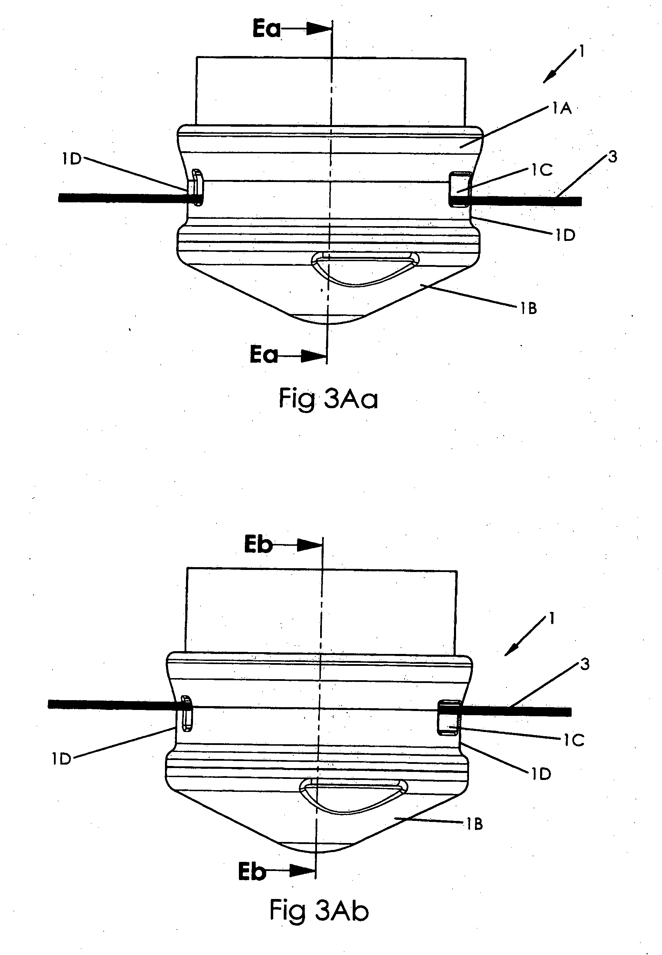

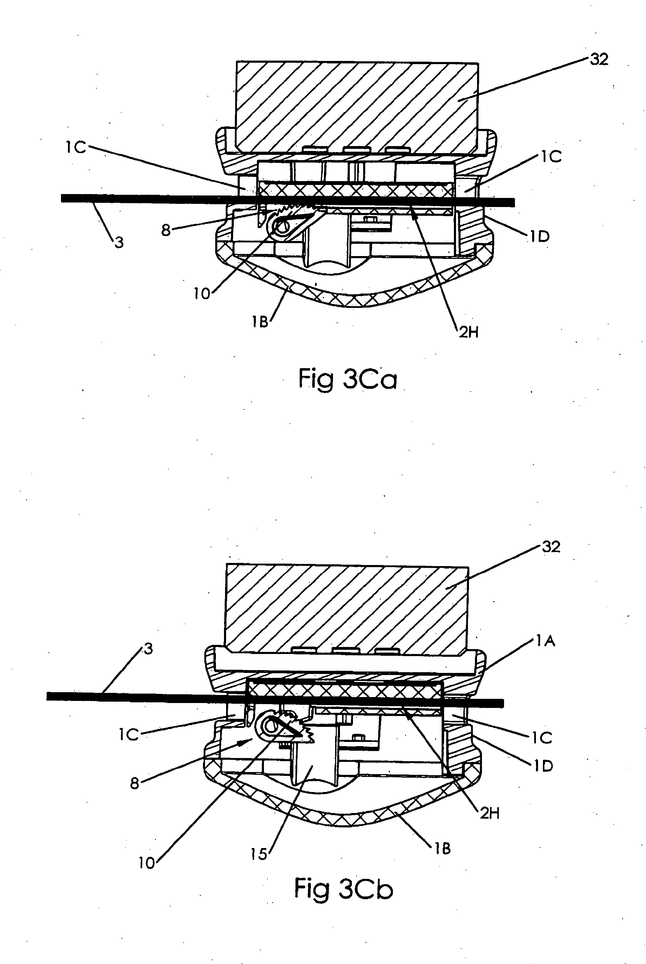

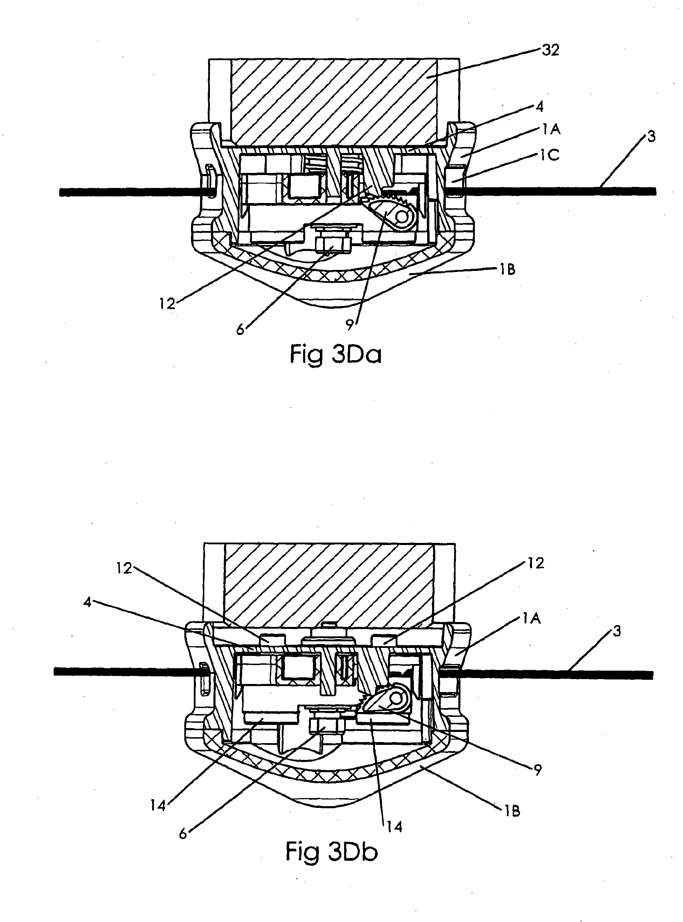

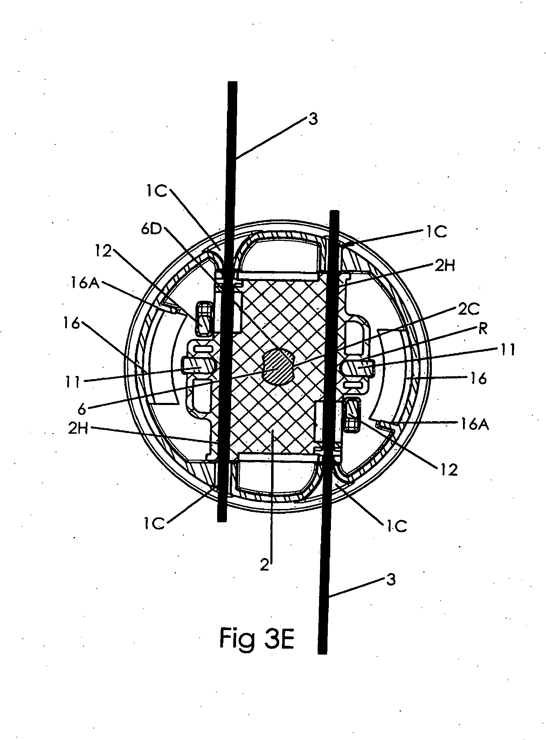

Les figures 3Aa à 3E illustrent une phase de positionnement des brins de fil de coupe dans le boîtier, suivant laquelle le mécanisme de serrage constituant l'étage supérieur du support d'élément ou outil de coupe mobile se trouve déplacé en position haute permettant l'escamotage des cames de pinçage et l'introduction des fils dans ledit mécanisme.

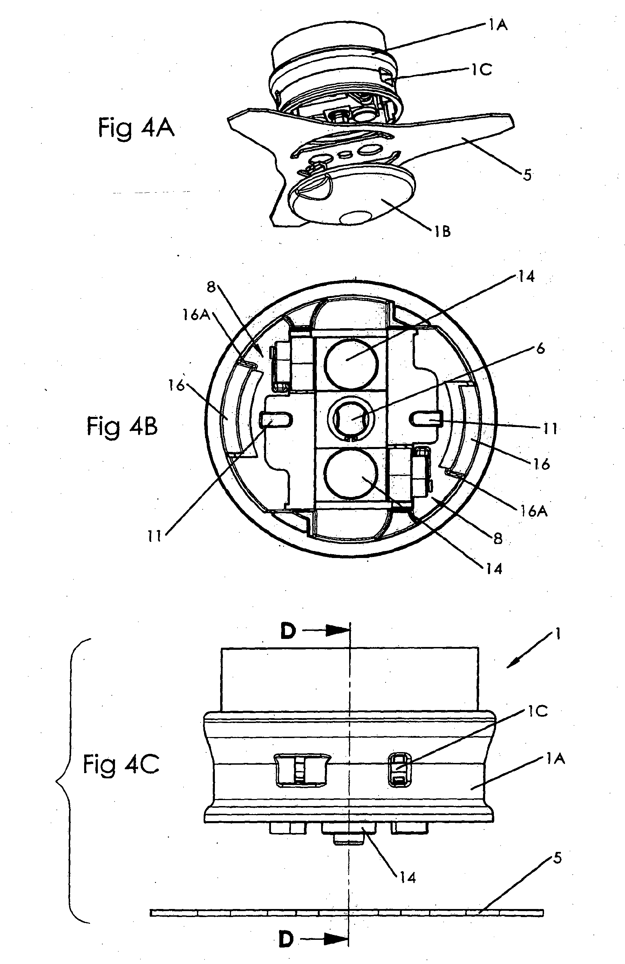

La figure 4A est une vue en perspective montrant la première phase de mise en place, manuellement, d'une lame métallique sur ou contre la face inférieure de la partie supérieure du boîtier extérieur.
La figure 4B est une vue de dessous de la figure 4A, après retrait de la lame de coupe et du bol glisseur.
La figure 4C est une vue extérieure éclatée de la figure 4A sans le bol glisseur.

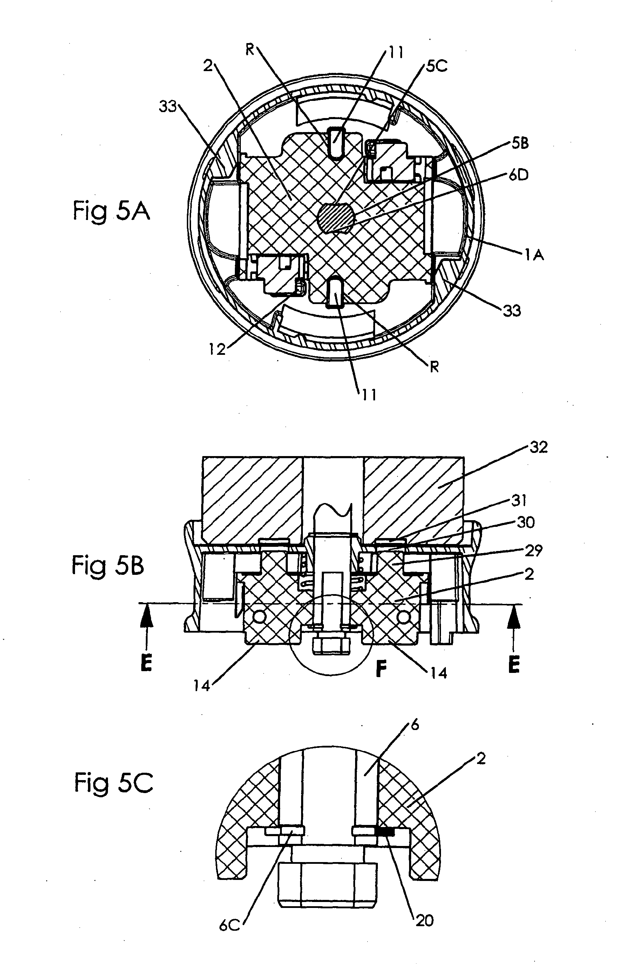

La figure 5A est une vue de dessous et en coupe selon la ligne E-E de la figure 5B.
La figure 5B est une vue en coupe selon la ligne D-D de la figure 4C.
La figure 5C est une vue de détail selon le repère F de la figure 5B.

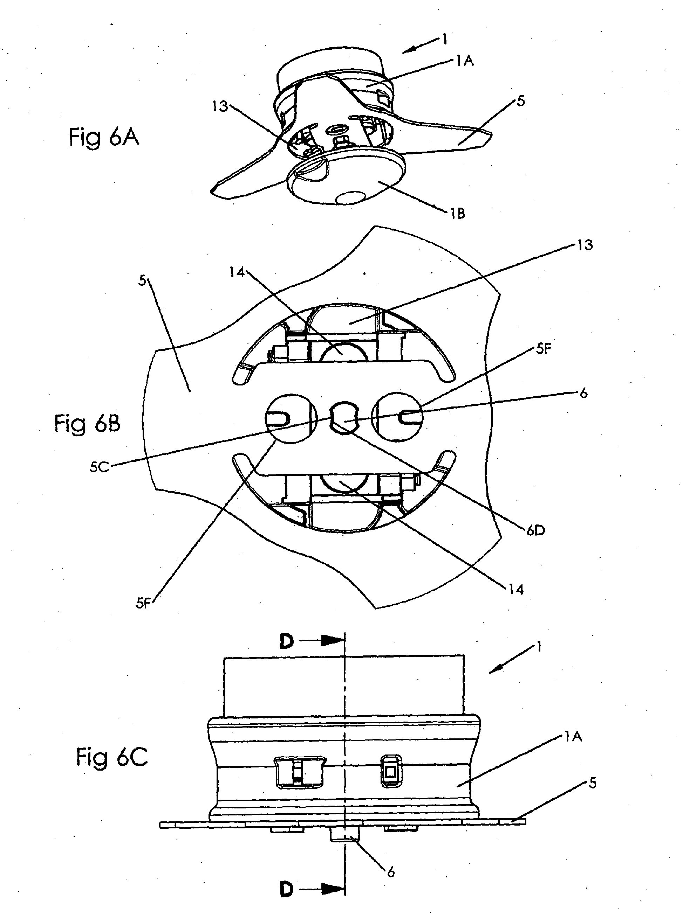

La figure 6A est une vue en perspective analogue à la figure 3A montrant la deuxième phase du positionnement de la lame métallique.
La figure 6B est une vue de dessous de la figure 6A sans le bol glisseur.
La figure 6C est une vue extérieure de la figure 6A sans le bol glisseur.

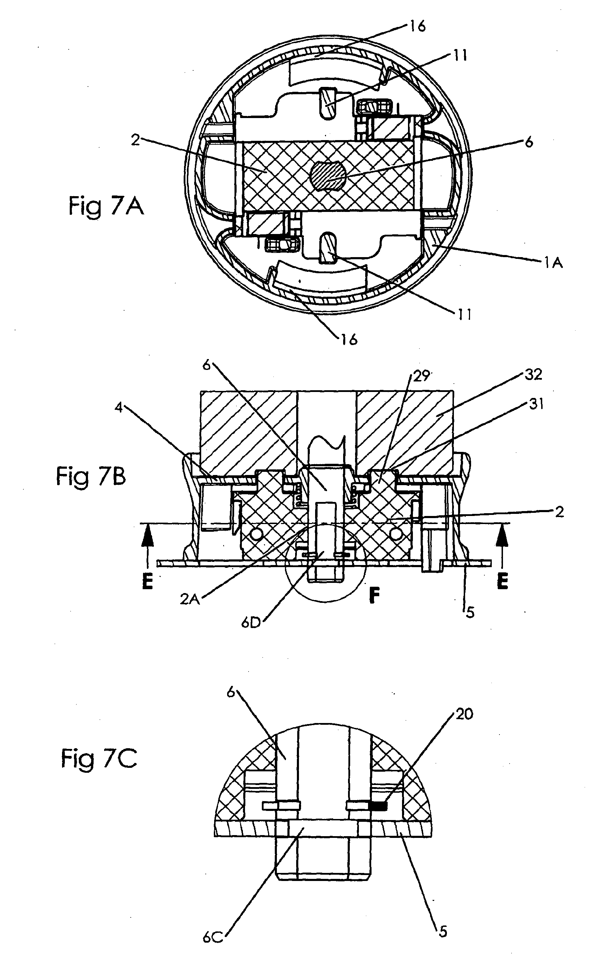

La figure 7A est une vue en coupe selon la ligne EE de la figure 6C.
La figure 7B est une vue en coupe selon la ligne D-D de la figure 6C.
La figure 7C est une vue de détail selon le repère F de la figure 7B.

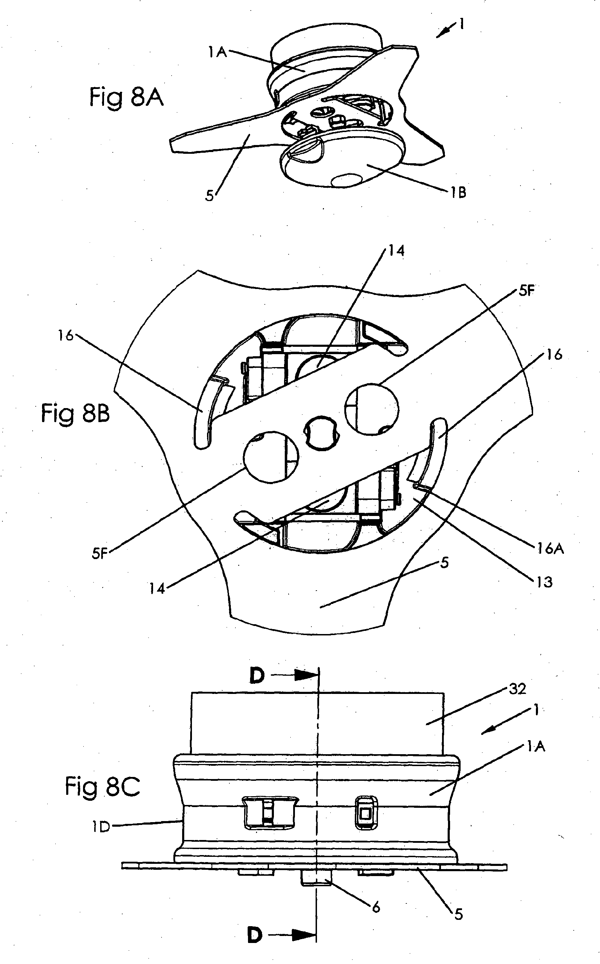

La figure 8A est une vue en perspective montrant la troisième phase du positionnement de la lame métallique.
La figure 8B est une vue de dessous de la figure 8A, le bol glisseur étant enlevé.
La figure 8C est une vue extérieure de la figure 8A sans le bol glisseur.

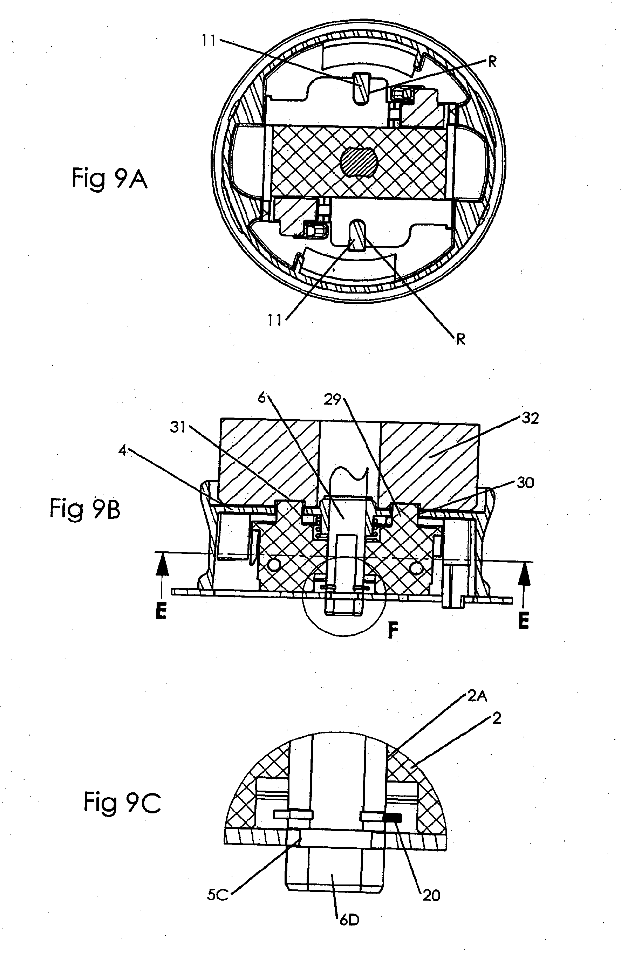

La figure 9A est une vue en coupe selon la ligne E-E de la figure 9B.
La figure 9B est une vue en coupe selon la ligne D-D de la figure 8C.
La figure 9C est une vue de détail selon le repère F de la figure 9B.

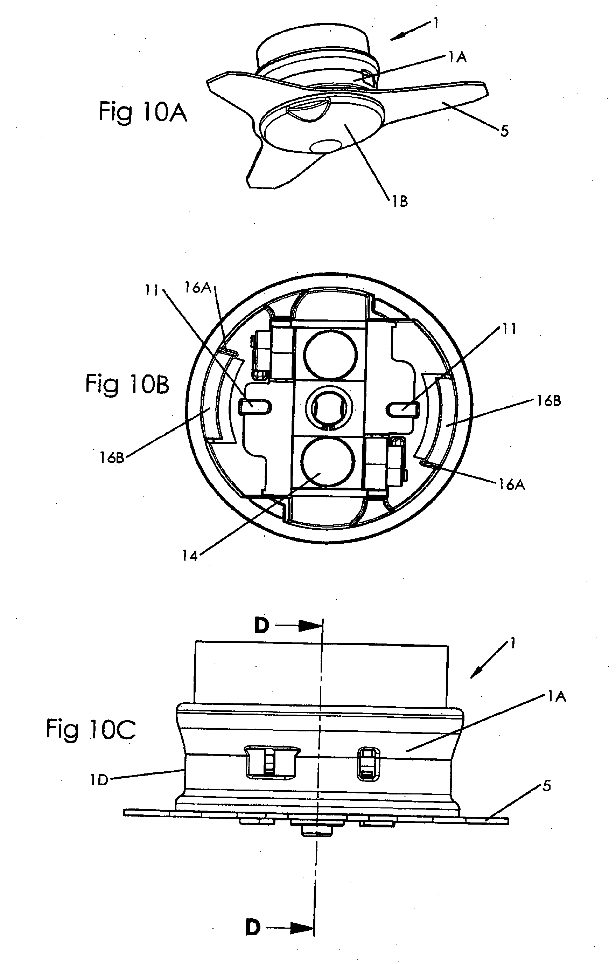

La figure 10A est une vue en perspective montrant la quatrième phase du positionnement de la lame métallique, en position verrouillée.
La figure 10B est une vue de dessous de la figure 10A.
La figure 10C est une vue extérieure de la figure 10A sans le bol glisseur.

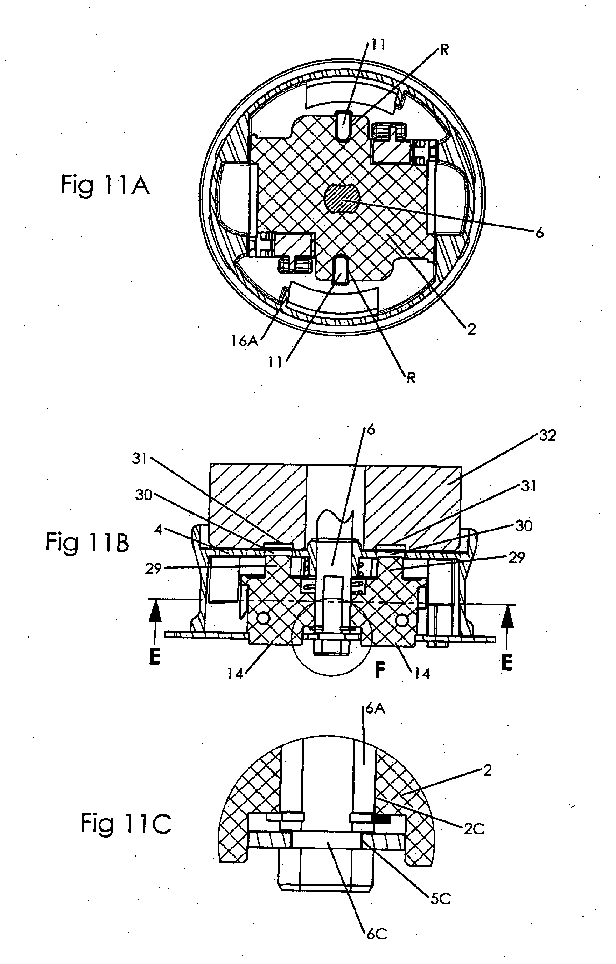

La figure 11A est une vue en coupe selon la ligne E-E de la figure 11B.
La figure 11B est une vue en coupe selon la ligne D-D de la figure 10C.
La figure 11C est une vue de détail selon le repère F de la figure 11B.

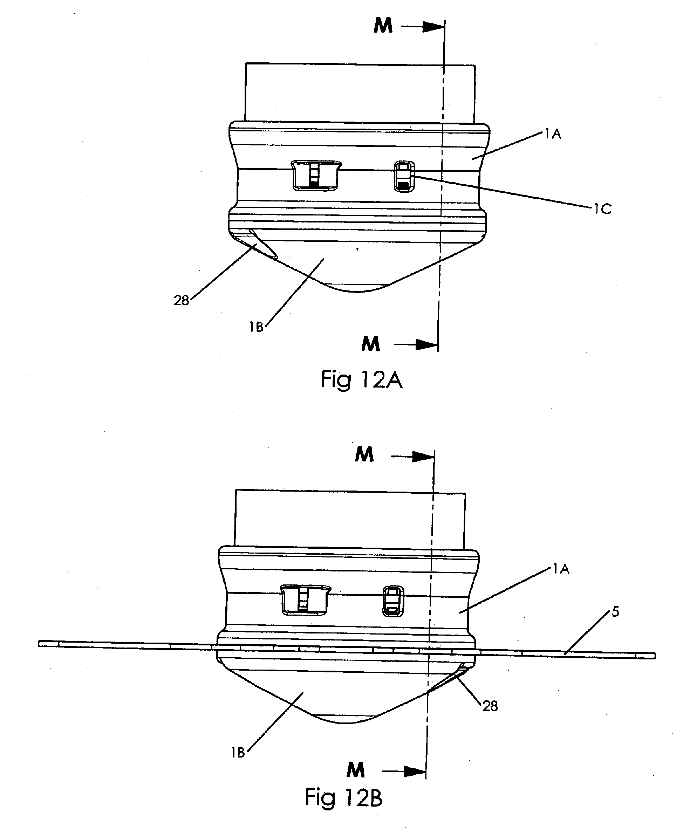

La figure 12A est une vue de face montrant une tête de coupe équipée de brins de fils en position verrouillée avec le bol glisseur en position débloquée.
La figure 12B est une vue de face montrant une tête de coupe équipée d'une lame métallique en position bloquée.

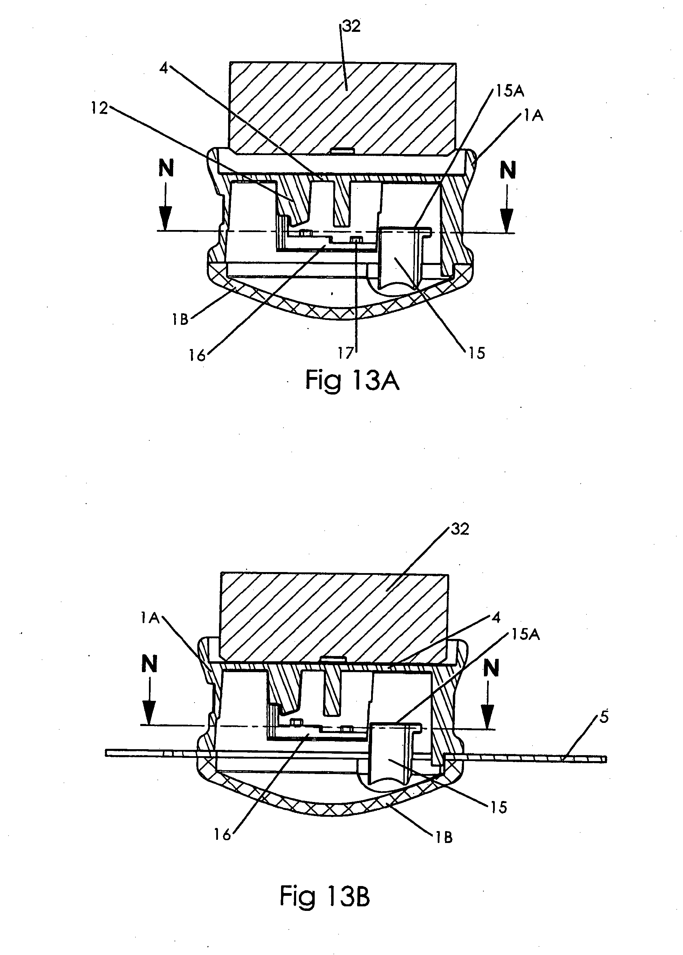

La figure 13A est une vue en coupe selon la ligne M-M de la figure 12A avec le bol glisseur en position débloquée.
La figure 13B est une vue en coupe selon la ligne M-M de la figure 12B avec le bol glisseur en position bloquée.

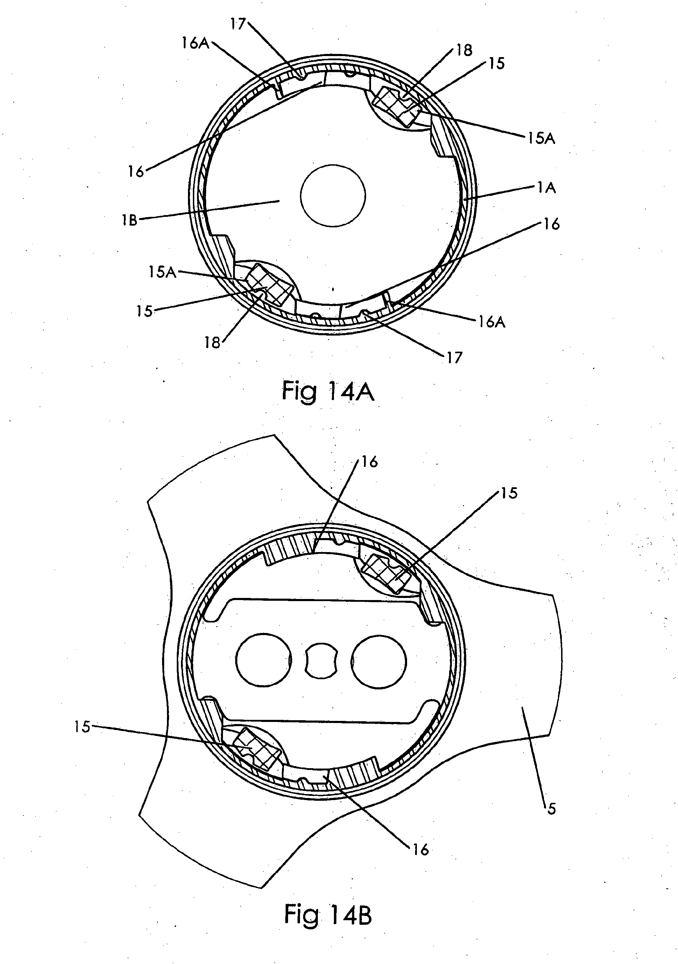

La figure 14A est une vue en coupe selon la ligne N-N de la figure 13A.
La figure 14B est une vue en coupe selon la ligne N-N de la figure 13B.

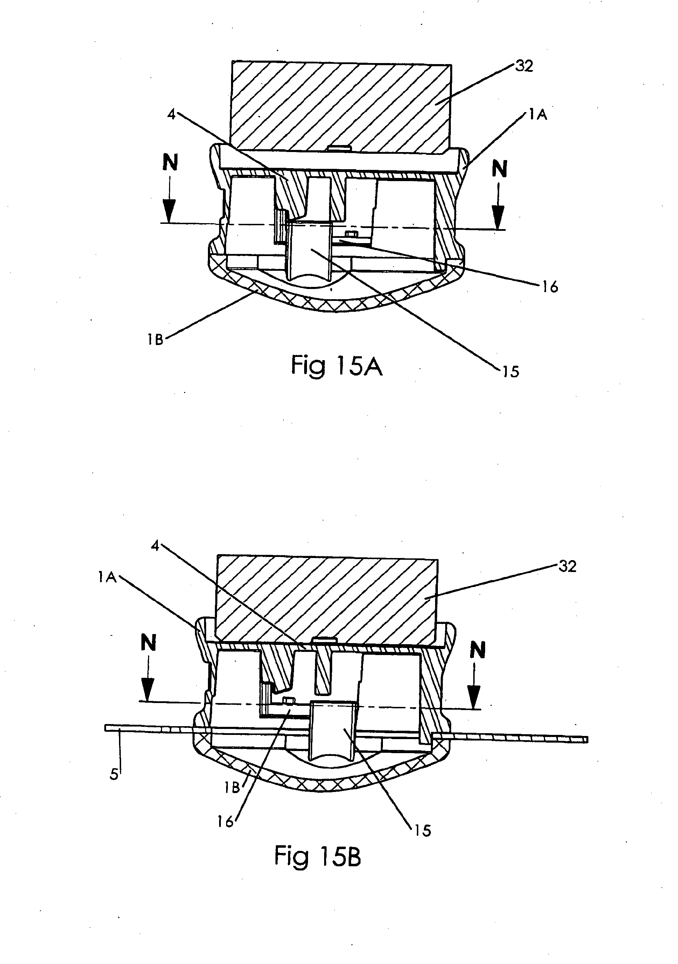

La figure 15A est une vue en coupe selon la ligne M-M de la figure 12A avec le bol glisseur en position débloquée.
La figure 15B est une vue en coupe selon la ligne M-M de la figure 12B avec le bol glisseur en position bloquée.

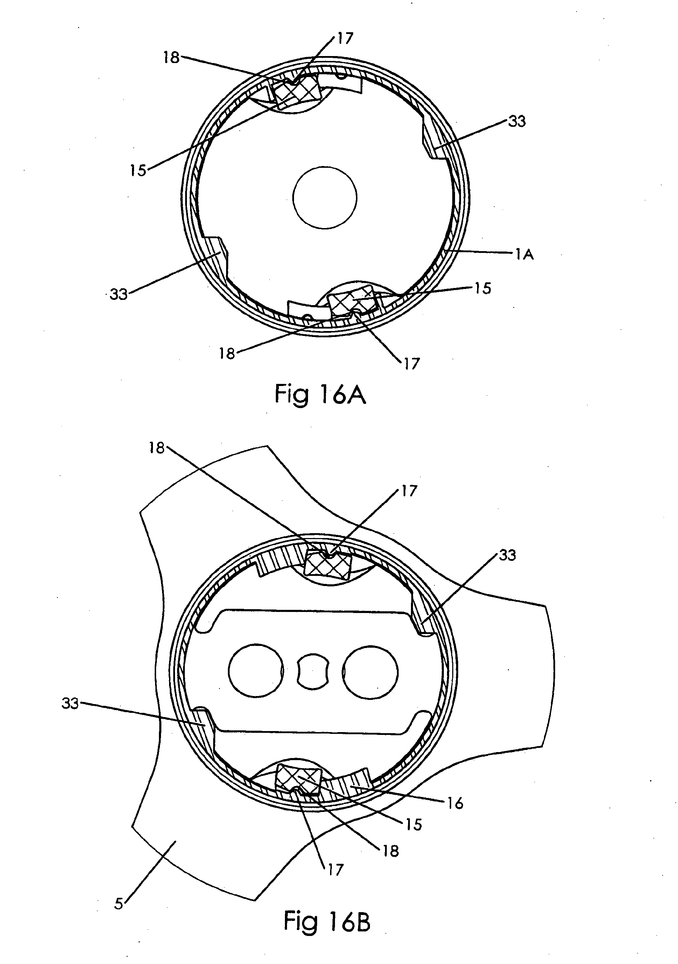

La figure 16A est une vue en coupe selon la ligne N-N de la figure 15A.
La figure 16B est une vue en coupe selon la ligne N-N de la figure 15B.

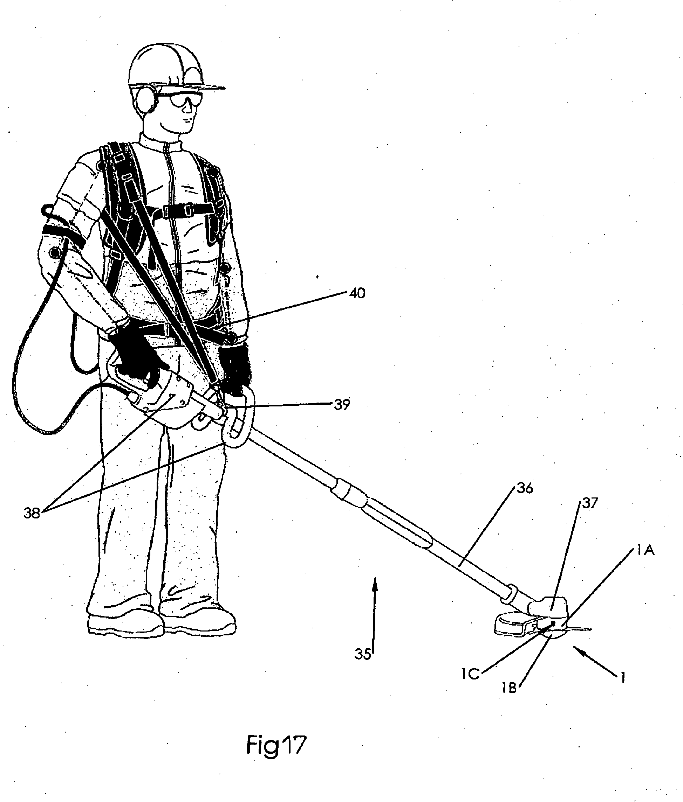

La figure 17 est une vue en perspective d'un coupe herbe équipé d'une tête de coupe utilisant une lame métallique, selon l'invention.

On se réfère auxdits dessins pour décrire des exemples intéressants, quoique nullement limitatifs, de réalisation de la tête de coupe polyvalente selon l'invention.

Dans l'exposé qui suit et dans les revendications, afin de faciliter la description de l'invention, des mots tels que « haute », « basse », « supérieure », « inférieure », « latérale » , « étage supérieur », « étage inférieur »... , sont utilisés en référence à une position de la tête de coupe en cours de travail selon laquelle l'axe de ladite tête de coupe se trouve orienté verticalement. Ces mots et expressions n'ont donc aucun caractère restrictif.

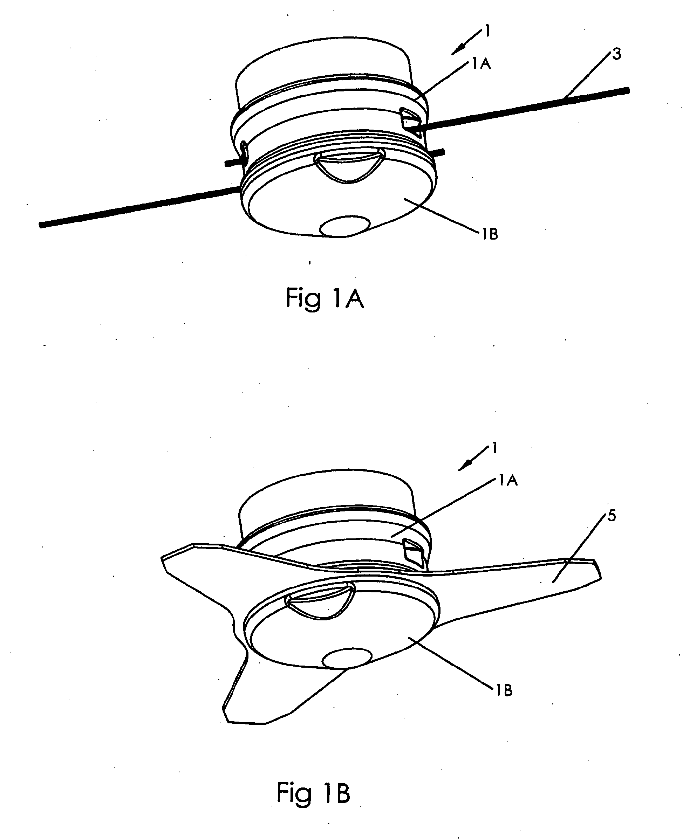

La tête de coupe 1 comprend un boîtier rotatif constitué d'au moins deux parties 1A et 1B, soit une partie supérieure 1A et une partie inférieure 1B assemblée à la base de ladite partie supérieure, et dans lequel est logé, avec une aptitude de translation axiale d'amplitude limitée, un support 2 d'élément(s) (Fig.1A et 1B) ou outil(s) de coupe 3, 5, traversé par un arbre axial d'entraînement 6 solidaire en rotation dudit support 2 et dont la partie supérieure est agencée pour permettre son accouplement au moteur d'un appareil de coupe portable, ledit support d'élément(s) 2 ou outil(s) de coupe étant monté avec une possibilité de mouvement axial d'amplitude limitée sur ledit arbre axial d'entraînement 6, ledit support d'élément(s) ou outil(s) de coupe étant pourvu de deux étages pour le montage sélectif de ces derniers, à savoir :
- un premier étage supérieur agencé pour le montage de brins de fil de coupe 3 (Fig. Aa à 3F), et,
- un deuxième étage inférieur agencé pour le montage amovible d'une lame de coupe interchangeable 5 (Fig. 4A à 10C),

La tête de coupe comprend des moyens de blocage ou de désaccouplement du ou des éléments de coupe sélectionné(s) 3 ou 5 conformés de sorte que l'application simultanée d'un mouvement axial relatif de sens contraire audit boîtier extérieur 1A et audit support d'éléments ou outil de coupe 2, entraîne :
- soit le placement de l'étage correspondant à l'élément de coupe 3 ou 5 choisi dans une position permettant le positionnement ou le retrait dudit élément,
- soit le blocage de ce dernier sur l'étage dudit support correspondant au type d'éléments de coupe choisi.

Selon cet exemple de réalisation le boîtier extérieur 1A et le support 2 d'éléments ou outil de coupe sont agencés de sorte que l'application simultanée de mouvements axiaux convergents audit boîtier et audit support logé à l'intérieur de ce dernier, est utilisée pour permettre le placement de l'étage correspondant, à l'élément de coupe choisi 3, 5, dans une position permettant le positionnement ou le retrait dudit élément de coupe, tandis que l'application simultanée de mouvements axiaux divergents audit boîtier et audit support, permet le blocage automatique sur l'étage du support correspondant au type d'élément de coupe choisi.

Les mouvements axiaux relatifs convergents du boîtier extérieur 1A et du support 2 d'élément(s) ou outil(s) de coupe 3, 5, sont obtenus automatiquement sous l'action d'un moyen élastique 7 de rappel, de sorte à permettre le blocage automatique des éléments ou outils de coupe après leur positionnement dans la tête de coupe.

Le moyen élastique de rappel est constitué par un ressort 7 agissant en compression et interposé entre un cloisonnement 4 intérieur du boîtier extérieur et le support 2 d'élément(s) ou outil de coupe intérieur 3, 5.

On décrit ci-après un exemple d'agencement non limitatif possible de l'étage supérieur du support d'éléments de coupe (2), ayant fait l'objet d'une demande de brevet séparée déposée le même jour par la déposante.

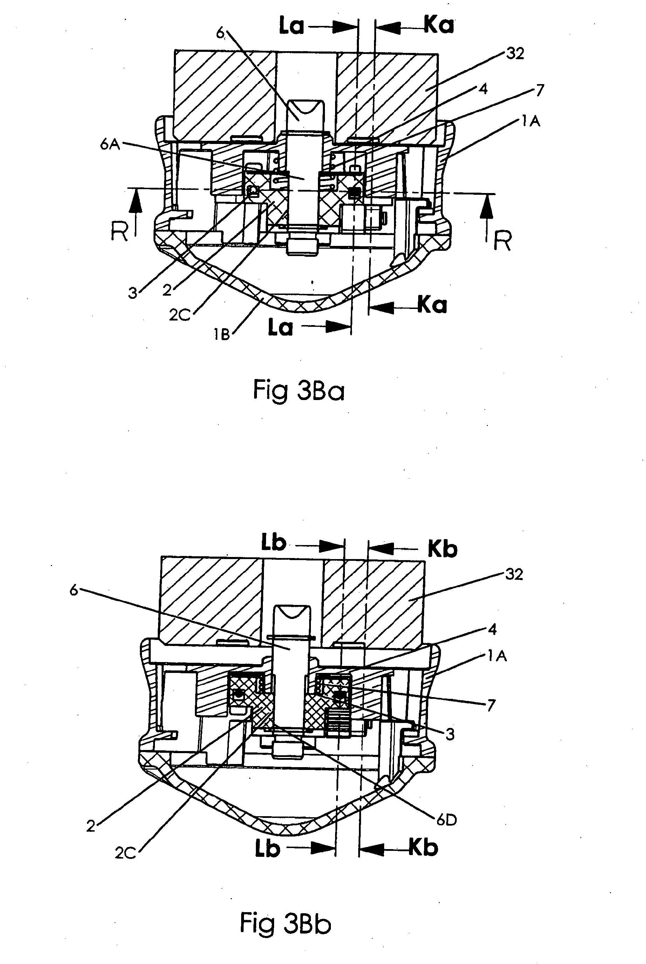

L'étage supérieur du support d'élément(s) ou outil de coupe comprend un mécanisme 8 de serrage des brins de coupe engagés à l'intérieur du boîtier extérieur 1A de la tête de coupe, au travers d'orifices 1C ménagés dans la paroi latérale 1 D de celui-ci, solidaire en rotation dudit support de mécanisme de serrage comporte des cames 9 de pinçage montées avec une aptitude de pivotement dans des plans parallèles entre eux et à l'axe de rotation de la tête de coupe, ce support d'éléments ou outils de coupe est monté avec une aptitude de translation axiale d'amplitude limitée dans le boîtier extérieur de la tête de coupe, ce dernier 1A et le support 2 du mécanisme de serrage étant agencés complémentairement, de sorte que l'application simultanée de mouvements axiaux convergents (flèches F1, Fig. 3Ba) audit boîtier et audit support est utilisée pour permettre de soulever les cames de pinçage de manière à autoriser l'introduction, le coulissement ou le positionnement des brins de coupe 3 à l'intérieur de la tête de coupe, tandis que l'application simultanée de mouvements axiaux divergents (flèche F2, Fig. 3Bb) audit boîtier et audit support, permet de rabaisser lesdites cames afin de réaliser le blocage en position active des brins de coupe dans la tête de coupe.

Le mécanisme de serrage comprend deux couloirs de guidage 2H et de positionnement des brins de coupe 3, disposés parallèlement, de part et d'autre de l'axe de rotation 6 de la tête de coupe en face des ouvertures 1C du boîtier extérieur, une portion d'entrée de chacun de ces couloirs est découverte et une came 9 pivotante est montée en regard de cette portion découverte, cette came étant soumise à l'action d'un ressort 10 tendant à appliquer sa surface de pincement en direction de ladite portion découverte, de sorte à presser fortement le brin de coupe engagé dans le couloir de positionnement contre le fond de ce dernier, en assurant ainsi le blocage dudit brin de coupe. Le boîtier est muni intérieurement de doigts 12 de poussée solidaires d'un cloisonnement 4 supérieur dudit boîtier et permettant de repousser et de faire pivoter la came, afin de supprimer la pression de celle-ci sur le brin de coupe 3, lorsque le boîtier extérieur et le support du mécanisme de serrage sont soumis à des forces de pression convergente tendant à rapprocher le cloisonnement 4 supérieur dudit boîtier extérieur et la face supérieure du support du mécanisme de serrage.

On décrit ci-après, un exemple d'agencement, non limitatif, possible de l'étage inférieur de la tête de coupe permettant le montage d'une lame de coupe interchangeable 5, cet agencement ayant fait l'objet d'une demande de Brevet séparée déposée le même jour par la Déposante.

Selon ce mode d'exécution, la lame de coupe 5 est insérée entre les parties supérieure 1A et inférieure 1B du boîtier.

Plus précisément :
- l'étage inférieur du support d'éléments ou d'outil de coupe 5 est constitué par un support de lame 2, ce support de lame et la lame de coupe 5 étant pourvus de moyens complémentaires de positionnement et d'accouplement en rotation de cette dernière, ces moyens pouvant être désaccouplés, à partir de leur position active par l'application manuelle simultanée, audit boîtier et audit support de lame, de mouvements axiaux relatifs convergents;
- la partie centrale de la lame comporte :
   - d'une part, une ouverture centrale 5B pour le passage de l'axe d'entraînement 6, deux orifices d'accouplement 5F disposés de part et d'autre de ladite ouverture centrale, deux découpures 13 présentant un bord extérieur courbe 13A et ;
   - d'autre part, des parties pleines 5E permettant l'enfoncement de la lame sur la partie distale de l'arbre de rotation, jusqu'à sa position de verrouillage.

Le support de lame et la partie centrale de la lame 5 sont agencés de sorte à permettre l'installation de ladite lame sur ledit support 2 de lame par un mouvement axial relatif convergent de ces derniers, suivi d'un mouvement de rotation de la lame ; l'enlèvement de la lame s'opérant par des mouvements inverses.

Les moyens de positionnement et d'accouplement de la lame de coupe au support de lame comprennent, d'une part, deux plots 14 d'accouplement disposés en sous-face dudit support de lame, de part et d'autre de l'ouverture inférieure du passage axial 24 ménagé dans ce dernier et, d'autre part, deux orifices 5F pratiqués de part et d'autre de l'ouverture axiale 5B de la lame dans lequel est engagée la portion distale 6A de l'arbre d'entraînement 6.

Selon un autre mode de réalisation préféré, l'accouplement en rotation du support de lame intérieur 2 et du boîtier extérieur 1A est réalisé au moyen de doigts d'entraînement 11 solidaires de la face interne d'une cloison supérieure 4 du boîtier et orientés parallèlement à l'axe de rotation de la tête de coupe, vers l'intérieur de celle-ci, ces doigts d'entraînement 11 étant engagés avec une aptitude de glissement dans des rainures R ménagées dans le support de lame.

Les rainures d'accouplement R sont ménagées dans au moins deux côtés opposés du support de lame.

Suivant une autre disposition, l'arbre d'entraînement 6 traverse un passage axial 24 ménagé dans le support de lame 2, et la portion traversante de l'arbre et ledit passage axial présentent un profil complémentaire 2C, 6D adapté pour permettre l'entraînement en rotation dudit support 2.

Selon un mode de réalisation préféré, ladite tête de coupe comporte des moyens pour limiter l'amplitude de la translation axiale du support de lame 5 sur la portion traversante de l'arbre d'entraînement 6. Ces moyens comprennent, par exemple, deux circlips 17 engagés dans des gorges annulaires 6C dont est muni l'arbre d'entraînement 6. La tête de coupe comprend des moyens de blocage du support de lame sur l'arbre d'entraînement.

Selon un mode de réalisation préféré, les moyens permettant le blocage axial de la lame de coupe 5 sur l'arbre d'entraînement 6 comprennent, d'une part, une ouverture axiale 5B que présente la lame de coupe et, d'autre part, une rainure annulaire 6C que comporte la portion distale 6A de l'arbre d'entraînement, à distance de son extrémité, la portion extrême dudit arbre d'entraînement présentant à partir de ladite rainure une forme circulaire munie de deux gorges longitudinales 6D femelles diamétralement opposées, tandis que l'ouverture axiale 5B de la lame de coupe présente une forme mâle 5C identique à celle du profil de ladite portion extrême.

Selon une autre disposition, le bord inférieur 21 de la partie supérieure 1A du boîtier et la lame de coupe 5 sont pourvus de moyens complémentaires de positionnement 13-33.

Les moyens complémentaires de positionnement du boîtier 1 et de la lame de coupe 5 comprennent, d'une part, deux lumières 13 délimitées par un bord externe 13A arqué et disposées de part et d'autre et à égale distance de l'alignement diamétral d'ouvertures 5F que présente la lame 5 et, d'autre part, des taquets 33 de guidage et d'arrêt, diamétralement opposés, dont est munie la base de la partie supérieure 4 du boîtier.

Selon une autre disposition caractéristique de l'invention, la partie de la paroi latérale 1 D du boîtier et la partie supérieure circulaire du bol glisseur sont munies de moyens de retenue complémentaires 15, 16 dont l'assemblage nécessite seulement un mouvement axial relatif des deux pièces, suivi d'un mouvement de rotation d'amplitude limitée permettant de mettre en prise les organes complémentaires desdits moyens de retenue.

Selon une autre disposition, les moyens de retenue du boîtier 1A et du bol 1 B comprennent, d'une part, au voisinage et le long du bord inférieur circulaire de la surface interne de la paroi latérale cylindrique 1 D du boîtier, au moins deux épaulements arrondis 16 diamétralement opposés, et, d'autre part, au moins deux pattes d'accrochage 15 diamétralement opposées s'étendant parallèlement à l'axe du bol glisseur et dont l'extrémité libre est munie d'un bec ou ergot 15A de verrouillage orienté en direction de cet axe.

De manière préférée, la tête de coupe comprend une butée 16A disposée à l'une des extrémités de chaque épaulement 16, limitant le mouvement rotatif des becs ou ergots de verrouillage 15A lors de la mise en place du bol glisseur dans la position d'assemblage.

Selon une autre disposition avantageuse, le bord du bec 15 et l'épaulement arrondi des butées 16 sont munis de moyens complémentaires de verrouillage en fin de mouvement de rotation, lors de l'assemblage des parties du boîtier.

Selon un mode d'exécution préféré, les moyens complémentaires de verrouillage de la partie inférieure sur la partie supérieure du boîtier sont constitués par un téton 17 que présente la face supérieure des épaulements 16 et par une encoche 18 prévue dans le bord extérieur 15A du bec, dans laquelle s'engage automatiquement ledit téton de verrouillage en fin du mouvement rotatif d'assemblage.

La mise en place et le démontage d'une lame mobile interchangeable 5 sur une tête de coupe se conçoit bien après l'exposé qui précède, en considérant la mise en place d'une lame de coupe sur une tête de coupe :
- on retire le bol glisseur 1B par un mouvement de rotation, afin de désaccoupler les épaulements 16 et les pattes de verrouillage 15; la face externe hémisphérique comportant deux empreintes 28, diamétralement opposées, facilitant cette manipulation ;
- on place la lame 5 sur l'extrémité de l'arbre d'entraînement 3 (une seule position étant possible en raison du profil complémentaire de ladite extrémité et de l'ouverture axiale 5B de la lame 5) dans cette position la lame de coupe est en appui sur les plots 14 du support de lame 2 ;
- on imprime un mouvement de rapprochement convergent au support de lame de coupe 5 et au boîtier extérieur 1, en exerçant une pression manuelle modérée sur la lame de coupe 5 qui est en appui sur les plots d'entraînement 14 du support de lame, jusqu'à ce que ladite lame 5 soit amenée au niveau de la rainure 6C ; on observe que les plots d'entraînement 14 du support de lame 2 se trouvent plaqués contre des parties pleines 5E de la lame et distants de 90° des orifices d'accouplement 5F. En pratique, ce mouvement de rapprochement convergent obtenu en appuyant sur la lame 5, a pour effet de déplacer le support de lame 2, à l'encontre de l'action antagoniste du ressort 7.

- on imprime un mouvement de rotation de l'ordre de 90° à la lame. Durant cette action la lame est guidée par des lumières arquées 13 dans lesquelles coulissent les taquets 33 de centrage solidaires de la base du boîtier extérieur 1A. A la fin de ce mouvement de rotation :
   - - d'une part, les éléments mâles ou lobes faisant saillies dans l'ouverture axiale 5B de la lame de coupe 5 se trouvent engagés entre les parois de la rainure annulaire 6C de l'arbre d'entrainement 6, tandis que
   - d'autre part, les plots d'accouplement 14 pénètrent automatiquement, sous l'action du ressort 7 dans les orifices d'accouplement 5F, le support de lame 2 se déplace axialement le long de l'axe d'entraînement 6 sous l'action du ressort de compression 7 jusqu'à l'appui contre le circlips 20 de retenue dudit axe d'entraînement.

Pour faciliter le maintien en position fixe du support de lame 2 lors de cette action de rotation de la lame 5, ledit support de lame 2 est muni sur sa face supérieure de deux tenons 29 qui, lors du déplacement vers le haut dudit support de lame, s'engagent dans deux trous 30 dont est pourvu le cloisonnement supérieur 4 du boîtier extérieur 1 pour s'engager dans les orifices 31 aménagés dans le support fixe 32 de la tête de coupe 1 servant de carter au moteur 37, ce qui évite la rotation dudit support de lame 2 durant cette action.
- on remet en place le bol glisseur 1B par un mouvement axial puis une rotation dudit bol glisseur 1 B par rapport au boîtier extérieur 1.

Pour effectuer le retrait de la lame 5 :
il faut enlever le bol glisseur 1B, puis appuyer sur les plots d'accouplement 14 du support de lame 2 pour les retirer des orifices 5F de la lame 5 et effectuer une rotation de ladite lame 5 d'environ 90°.

Les plots d'entraînement se retrouvent à nouveau sous la lame de coupe 5 et les lobes 5A en face du profil complémentaire de l'axe d'entraînement 6 ce qui permet à la lame de coupe 5 de se déplacer en direction de la partie distale de l'axe d'entraînement 6 jusqu'à son dégagement du dit axe d'entraînement sous l'action du support de lame 2 sur lequel agit le ressort de compression 7.

L'invention concerne également les appareils de coupe portables, tels que par exemple, coupe-herbe, coupe-bordure, débroussailleuse, taille-haie, ..., munis ou susceptibles d'être équipés d'une tête de coupe comportant les caractéristiques précédemment exposées.

De tels appareils dont un exemple désigné dans son ensemble par la référence 35 à la figure 17, comportent généralement : un manche 36 dont l'extrémité distale supporte la tête de coupe 1 (1A, 1 B, 1 C), une motorisation 37 installée à la partie inférieure ou à la partie supérieure du manche pour l'entraînement en rotation de la tête de coupe, une poignée en U ou poignée double 38 de guidage et de commande de cette motorisation, un anneau 39 pour la fixation d'un harnais de portage 40. La motorisation d'entraînement de la tête de coupe peut être assurée par un moteur thermique ou par un moteur électrique alimenté par une batterie portable, ou par raccordement au secteur.

## Revendications

1. Tête de coupe rotative multifonction (1) pour appareils de coupe, et pour appareils portables munis d'une telle tête de coupe, comprenant un boîtier rotatif constitué d'au moins deux parties (1A-1B), soit une partie supérieure et une partie inférieure assemblée à la base de ladite partie supérieure, et dans lequel est logé, avec une aptitude de translation axiale d'amplitude limitée, un support (2) d'élément(s) ou outil(s) de coupe (3,5) traversé par un arbre axial (6) d'entraînement solidaire en rotation dudit support et dont la partie supérieure est agencée pour permettre son accouplement au moteur d'un appareil de coupe portable, ledit support d'élément(s) ou outil(s) de coupe étant monté avec une possibilité de mouvement axial d'amplitude limitée sur ledit arbre axial d'entraînement,
tête de coupe **caracterisée en ce que** ledit support d'élément(s) ou outil(s) de coupe est pourvu de deux étages pour le montage sélectif de ces derniers, à savoir :
- un premier étage agencé pour le montage de brins de fil de coupe (3), et,
- un deuxième étage agencé pour le montage d'une lame de coupe (5) interchangeable.

2. Tête de coupe rotative multifonction (1) pour appareils de coupe, selon la revendication 1, **caractérisée en ce que** :
- le premier étage supérieur est agencé pour le montage de brins de fil de coupe (3),
- le deuxième étage inférieur est agencé pour le montage amovible d'une lame de coupe interchangeable (5).

3. Tête de coupe rotative multifonction selon les revendications 1 et 2 comprenant des moyens de blocage (8) ou de désaccouplement du ou des éléments de coupe sélectionné(s) (3,5) conformés de sorte que l'application simultanée de mouvements axiaux relatifs de sens contraire audit boîtier extérieur et audit support d'éléments ou outil(s) de coupe, entraîne : - soit le placement de l'étage correspondant au type d'élément(s) de coupe choisi dans une position permettant le positionnement ou le retrait du ou desdits élément(s) (3,5) ; - soit le blocage de ce(s) dernier(s) sur l'étage dudit support correspondant au type d'éléments de coupe (5) choisi.

4. Tête de coupe rotative multifonction selon l'une quelconque des revendications 1 à 3 **caractérisée en ce que** le boîtier extérieur (1) et le support (2) d'éléments ou outil(s) de coupe (3,5) sont agencés de sorte que l'application simultanée de mouvements axiaux convergents audit boîtier et audit support logé à l'intérieur de ce dernier, est utilisée pour permettre le placement de l'étage correspondant au type d'élément(s) de coupe choisi dans une position permettant le positionnement ou le retrait dudit ou desdits élément(s) de coupe, tandis que l'application simultanée de mouvements axiaux divergents audit boîtier et audit support, permet le blocage automatique desdits éléments de coupe sur l'étage du support correspondant au type d'éléments de coupe choisi.

5. Tête de coupe rotative multifonction selon les revendications 1 à 4 **caractérisée en ce que** les mouvements axiaux relatif convergents du boîtier extérieur (1) et du support (2) d'élément(s) ou outil(s) de coupe (3,5) sont obtenus automatiquement sous l'action d'un moyen élastique de rappel (7), de sorte à permettre le blocage automatique des éléments ou outils de coupe après leur positionnement dans la tête de coupe.

6. Tête de coupe rotative multifonction selon la revendication 5 **caractérisée en ce que** le moyen élastique de rappel est constitué par un ressort (7) agissant en compression et interposé entre un cloisonnement intérieur (4) du boîtier extérieur et le support (2) d'élément(s) ou outil(s) de coupe intérieur.

7. Tête de coupe rotative multifonction selon les revendications 1 à 6 **caractérisée en ce que** l'étage supérieur du support d'élément(s) ou outil de coupe comprend un mécanisme de serrage (8,9,10) des brins de coupe (3) engagés à l'intérieur du boîtier extérieur de la tête de coupe, au travers d'orifices (1C) ménagés dans la paroi latérale (1D) de celui-ci, solidaire en rotation dudit support de mécanisme de serrage comporte des cames de pinçage (9) montées avec une aptitude de pivotement dans des plans parallèles entre eux et à l'axe de rotation de la tête de coupe, ce support d'éléments ou outils de coupe est monté avec une aptitude de translation axiale d'amplitude limitée dans le boîtier extérieur de la tête de coupe, ce dernier et le support (2) du mécanisme de serrage étant agencés complémentairement, de sorte que l'application simultanée de mouvements axiaux convergents audit boîtier et audit support est utilisée pour permettre de soulever les cames de pinçage de manière à autoriser l'introduction, le coulissement ou le positionnement des brins de coupe (3) à l'intérieur de la tête de coupe, tandis que l'application simultanée de mouvements axiaux divergents audit boîtier et audit support, permet de rabaisser lesdites cames afin de réaliser le blocage en position active des brins de coupe dans la tête de coupe.

8. Tête de coupe rotative multifonction selon les revendications 1 à 7 **caractérisée en ce que** le mécanisme de serrage (8) comprend deux couloirs de guidage (2H) et de positionnement des brins de coupe (3), disposés parallèlement, de part et d'autre de l'axe de rotation de la tête de coupe en face des ouvertures (1C) du boîtier extérieur, une portion d'entrée de chacun de ces couloirs est découverte et une came pivotante (9) est montée en regard de cette portion découverte, cette came étant soumise à l'action d'un ressort (10) tendant à appliquer sa surface de pincement en direction de ladite portion découverte, de sorte à presser fortement le brin de coupe engagé dans le couloir de positionnement contre le fond de ce dernier, en assurant ainsi le blocage dudit brin de coupe, le boîtier est muni intérieurement de doigts de poussée (12) solidaires d'un cloisonnement supérieur (4) dudit boîtier et permettant de repousser et de faire pivoter la came (9), afin de supprimer la pression de celle-ci sur le brin de coupe, lorsque le boîtier extérieur et le support du mécanisme de serrage sont soumis à des forces de pression convergente tendant à rapprocher le cloisonnement supérieur dudit boîtier extérieur et la face supérieure du support du mécanisme de serrage.

9. Tête de coupe rotative multifonction selon les revendications 1 à 8 **caractérisée en ce que** la lame de coupe (5) est insérée entre les parties supérieure et inférieure du boîtier (1A, 1 B)
- l'étage inférieur du support d'éléments ou d'outil de coupe est constitué par un support de lame (2), ce support de lame et la lame (5) de coupe étant pourvus de moyens complémentaires (2C, 5C,6D) de positionnement et d'accouplement en rotation de cette dernière, ces moyens pouvant être désaccouplés, à partir de leur position active par l'application manuelle simultanée, audit boîtier et audit support de lame, de mouvements axiaux relatifs convergents ;
- des moyens complémentaires de blocage axial de la lame de coupe sur la portion distale de l'arbre d'entraînement ;
- un moyen d'accouplement automatique du support de lame et de la lame lorsqu'une lame est positionnée sur ledit support de lame.

10. Tête de coupe rotative multifonction selon les revendications 1 à 9 **caractérisée en ce que**, la partie centrale de la lame comporte :
- d'une part, une ouverture centrale (5A) pour le passage de l'axe d'entraînement (6), deux orifices d'accouplement (5F) disposés de part et d'autre de ladite ouverture centrale, deux découpures (13) présentant un bord extérieur courbe (13A)et ;
- d'autre part, des parties pleines permettant l'enfoncement de la lame sur la partie distale de l'arbre de rotation, jusqu'à sa position de verrouillage.

11. Tête de coupe rotative multifonction selon les revendications 1 à 10 **caractérisée en ce que** le support de lame (2) et la partie centrale de la lame sont agencés de sorte à permettre l'installation de ladite lame sur ledit support de lame par un mouvement axial relatif convergent de ces derniers, suivi d'un mouvement de rotation de la lame ; l'enlèvement de la lame s'opérant par des mouvements inverses.

12. Tête de coupe rotative multifonction selon les revendications 1 à 11 **caractérisée en ce que** les moyens de positionnement et d'accouplement de la lame de coupe au support de lame comprennent, d'une part, deux plots d'accouplement (14) disposés en sous-face dudit support de lame, de part et d'autre de l'ouverture axiale ménagée dans ce dernier et, d'autre part, deux orifices pratiqués de part et d'autre de l'ouverture axiale (5B) de la lame dans lequel est engagée la portion distale de l'arbre d'entraînement (6).

13. Tête de coupe rotative multifonction selon les revendications 1 à 12 **caractérisée en ce que** l'accouplement en rotation du support de lame intérieur (2) et du boîtier extérieur (1A) est réalisé au moyen de doigts d'entraînement (11) solidaires de la face interne d'une cloison supérieure du boîtier et orientés parallèlement à l'axe de rotation de la tête de coupe, vers l'intérieur de celle-ci, ces doigts d'entraînement étant engagés avec une aptitude de glissement dans des rainures (R) ménagées dans le support de lame (2).

14. Tête de coupe rotative multifonction selon les revendications 1 à 13 **caractérisée en ce que** les rainures d'accouplement (R) sont ménagées dans au moins deux côtés opposés du support de lame(2).

15. Tête de coupe rotative multifonction selon les revendications 1 à 14 **caractérisée en ce que** l'arbre d'entraînement (6) traverse un passage axial (2A) ménagé dans le support de lame (2) et la portion traversante de l'arbre et ledit passage axial présentent un profil complémentaire (2A,6D) adapté pour permettre l'entraînement en rotation dudit support.

16. Tête de coupe rotative multifonction selon les revendications 1 à 15 **caractérisée en ce que** ladite tête de coupe comporte des moyens (20) pour limiter l'amplitude de la translation axiale du support de lame sur la portion traversante de l'arbre d'entraînement (6).

17. Tête de coupe rotative multifonction selon les revendications 1 à 15 **caractérisée en ce que** la tête de coupe comprend des moyens de blocage du support de lame sur l'arbre d'entraînement (6).

18. Tête de coupe rotative multifonction selon les revendications 1 à 17 **caractérisée en ce que** les moyens permettant le blocage axial de la lame de coupe (5) sur l'arbre d'entraînement (6) comprennent, d'une part, une ouverture axiale (5A) que présente la lame de coupe et, d'autre part, une rainure annulaire (6C) que comporte la portion distale (6A) de l'arbre d'entraînement, à distance de son extrémité, la portion extrême dudit arbre d'entraînement présentant à partir de ladite rainure une forme circulaire munie de deux gorges longitudinales femelles (6D) diamétralement opposées, tandis que l'ouverture axiale de la lame de coupe présente une forme mâle (5C) identique à celle du profil de ladite portion extrême.

19. Tête de coupe rotative multifonction selon les revendications 1 à 18 **caractérisée en ce que** le bord inférieur de la partie supérieure du boîtier et la lame de coupe sont pourvus de moyens complémentaires de positionnement.

20. Tête de coupe rotative multifonction selon les revendications 1 à 19 **caractérisée en ce que** les moyens complémentaires de positionnement du boîtier et de la lame de coupe comprennent, d'une part, deux lumières (13) délimitées par un bord externe arqué et disposées de part et d'autre et à égale distance de l'alignement diamétral d'ouvertures que présente la lame et, d'autre part, des taquets (33) de guidage et d'arrêt, diamétralement opposés, dont est munie la base de ladite partie supérieure.

21. Tête de coupe rotative multifonction selon les revendications 1 à 20 **caractérisée en ce que** la partie basse de la paroi latérale du boîtier et la partie supérieure circulaire du bol glisseur sont munies de moyens de retenue complémentaires (15,16,17,18) dont l'assemblage nécessite seulement un mouvement axial relatif des deux pièces, suivi d'un mouvement de rotation d'amplitude limitée permettant de mettre en prise les organes complémentaires desdits moyens de retenue.

22. Tête de coupe rotative multifonction selon les revendications 1 à 21 **caractérisée en ce que** les moyens de retenue du boîtier (1A) et du bol (1B) comprennent, d'une part, au voisinage et le long du bord inférieur circulaire de la surface interne de la paroi latérale cylindrique du boîtier, au moins deux épaulements arrondis (16) diamétralement opposés, et, d'autre part, au moins deux pattes d'accrochage (15) diamétralement opposées s'étendant parallèlement à l'axe du bol glisseur et dont l'extrémité libre est munie d'un bec ou ergot de verrouillage (15A) orienté en direction de cet axe.

23. Tête de coupe rotative multifonction selon la revendication 22 **caractérisée en ce qu'**elle comprend une butée (16A) disposée à l'une des extrémités de chaque épaulement (16), limitant le mouvement rotatif des becs ou ergots de verrouillage (15A) lors de la mise en place du bol glisseur dans la position d'assemblage.

24. Tête de coupe rotative multifonction selon les revendications 22 et 23 **caractérisée en ce que** le bord du bec et l'épaulement arrondi des becs sont munis de moyens complémentaires de verrouillage en fin de mouvement de rotation, lors de l'assemblage des parties du boîtier.

25. Tête de coupe rotative multifonction selon les revendications 22 à 24 **caractérisée en ce que** les moyens complémentaires de verrouillage de la partie inférieure sur la partie supérieure du boîtier sont constitués par un téton (17) que présente la face supérieure des épaulements (16) et par une encoche (18) prévue dans le bord extérieur du bec, dans laquelle s'engage automatiquement ledit téton de verrouillage en fin du mouvement rotatif d'assemblage.

26. Appareil de coupe portable tel que coupe-herbe, ou coupe-bordure, ou débroussailleuse ou faux à moteur, ou taille-haie, **caractérisé en ce qu'**il est équipé d'une tête de coupe rotative utilisant, sélectivement, soit des brins de coupe soit une lame de coupe, réalisée selon l'une quelconque des revendications 1 à 25.

## Patentansprüche

1. Multifunktionaler rotierender Schneidkopf (1) für Schneideeinrichtungen und für tragbare Geräte, die einen solche Schneidkopf aufweisen, umfassend ein drehbares Gehäuse aus mindestens zwei Teilen (1A-1B) aus einem oberen Abschnitt und einen unteren Abschnitt der mit der Basis des oberen Abschnitts verbunden und darin untergebracht ist, mit einer Fähigkeit einer axialen Bewegung mit einer begrenzten Auslenkung, Elementeträger (2) oder Schneidwerkzeughalter(en) (3,5) durch welche eine drehfest mit dem genannten Träger verbundene axiale Welle (6) hindurchragt und dessen oberen Abschnitt derart angeordnet ist, um eine Kopplung mit dem Motor einer tragbaren Schneidvorrichtung zu ermöglichen, wobei der Elementeträger oder der Schneidwerkzeughalter mit der Möglichkeit einer axialen Bewegung von begrenzter Auslenkung auf der axialen Antriebswelle des Schneidkopfes montiert ist, **dadurch gekennzeichnet, dass** der Elementeträger oder Schneidwerkzeughalter mit zwei Ebenen für eine selektive Montage dieser ausgebildet ist, und zwar:
- eine erste Ebene, die zur Befestigung eines Schneiddrahtes (3) angeordnet ist, und
- eine zweite Ebene, die zur Befestigung eines austauschbaren Schneidmessers (5) angeordnet ist.

2. Multifunktionaler rotierender Schneidkopf (1) für Schneidevorrichtungen nach Anspruch 1, **dadurch gekennzeichnet, dass**:
- die erste obere Ebene ist für die Montage eines Schneiddrahtes (3) angeordnet ist,
- die zweite untere Ebene ist zum lösbaren Anbringen eines auswechselbaren Schneidmessers (5) angeordnet ist.

3. Multifunktionaler rotierender Schneidkopf nach den Ansprüchen 1 und 2 umfassend Mittel (8) zum Verriegeln oder Abkuppeln des oder der ausgewählten Schneidelemente (s) (3,5), die derart angepasst sind, dass die gleichzeitige Ausführung von gegenüber dem Außengehäuse und den genannten Tragelementen oder Schneidewerkzeughaltern axial gegenläufigen Relativbewegungen möglich ist:
- entweder die Platzierung der Ebene entsprechend dem ausgewählten Schneidetyp in einer Position zum Positionieren oder Entfernen des oder der besagten Element(e) (3,5);
- oder die Verriegelung letzterer auf der Ebene des besagten Trägers entsprechend dem ausgewählten Schneidetyp (5).

4. Multifunktionaler rotierender Schneidkopf nach einem der Ansprüche 1 bis 3, **dadurch gekennzeichnet, dass** das Außengehäuse (1) und der Elementeträger (2) oder Schneidewerkzeugträger (3,5) so angeordnet sind, dass die gleichzeitige Ausführung von gegenüber dem Außengehäuse und den genannten Elementeträgern oder Schneidewerkzeughaltern axial gleichgerichtete Relativbewegungen möglich ist, um die Platzierung der Ebene entsprechend dem ausgewählten Schneidetyp in einer Position zum Positionieren oder Entfernen des oder der besagten Schneidelemente zu ermöglichen, während die gleichzeitige Ausführung entgegengesetzter axialer Bewegungen gegenüber dem besagten Gehäuse und Träger die automatische Verriegelung der Schneidelemente auf der Trägerebene entsprechend dem ausgewählten Schneidetyp ermöglicht wird.

5. Multifunktionaler rotierender Schneidkopf nach den Ansprüchen 1 bis 4, **dadurch gekennzeichnet, dass** die relativen axialen gegenläufigen Bewegungen des Außengehäuse (1) und des Elementeträgers (2) oder Schneidwerkzeugträgers (3,5) automatisch durch die Wirkung eines elastischen Rückstellmittels (7) erreicht werden, derart um die automatischen Verriegelung der Scheidelemente oder Schneidwerkzeuge nach ihrer Positionierung am Schneidkopf zu ermöglichen.

6. Multifunktionaler rotierender Schneidkopf nach Anspruch 5, **dadurch gekennzeichnet, dass** das elastische Rückstellmittel aus einer auf Kompression wirkenden Feder (7) gebildet wird, die zwischen einer inneren Abschottung (4) des Außengehäuses und dem inneren Elementeträger (2) oder Schneidwerkzeugträger angeordnet ist.

7. Multifunktionaler rotierender Schneidkopf nach den Ansprüchen 1 bis 6, **dadurch gekennzeichnet, dass** die obere Ebene des Elementeträgers oder Schneidwerkzeugträgers einen Spannmechanismus (8, 9, 10) für den Schneidedraht (3) umfasst, der innerhalb des Außengehäuses des Schneidkopfes in Eingriff, durch die Öffnungen (1 C) in der Seitenwand (1 D) drehfest mit dem Spannmechanismus ausgebildet ist, der Klemmnocken (9) besitzt und mit einer Fähigkeit zum Schwenken in Ebenen parallel zueinander und zu der Drehachse des Schneidkopfs montiert ist, der Elementeträger oder Schneidewerkzeugträger ist mit der Fähigkeit einer axialen Bewegung mit begrenzter Auslenkung in dem Außengehäuse des Schneidkopfes montiert, wobei letzterer mit dem Spannmechanismus komplementär so angeordnet ist, dass die gleichzeitige Ausführung von gegenüber dem Gehäuse und dem Träger gleichläufigen Axialbewegungen genutzt wird, um ein Anheben der Greifnocken zum Einführung, Einschieben oder Positionierung des Schneidedrahtes (3) in dem Schneidkopf zu ermöglichen, während die gleichzeitige Ausführung gegenüber dem Gehäuse entgegengesetzter axialer Bewegungen es ermöglicht, die genannten Nocken zum Verriegeln abzusenken, um eine Verriegelung in der aktiven Position des Schneidedrahtes im Schneidkopf zu realisieren.

8. Multifunktionaler rotierender Schneidkopf nach den Ansprüchen 1 bis 7, **dadurch gekennzeichnet, dass** der Spannmechanismus (8) zwei Kanäle (2H) zum Führen und Positionieren der Schneiddrähte (3) aufweist, die parallel auf der einen und der anderen Seite der Drehachse des Schneidkopfes zueinander gegenüber den Öffnungen (1 C) des Außengehäuses angeordnet sind, ein Einlassabschnitt von jedem dieser Durchgänge ist offen ausgebildet und eine schwenkbare Nockenscheibe (9) ist gegenüber dem offenen Teil montiert, diese Nockenscheibe unterliegt der Wirkung einer Feder (10), deren klemmende Oberfläche sich in Richtung des offenen Abschnitts richtet, dergestalt um den Schneidedraht fest im Eingriff gegen die Unterseite des Kanals zu drücken, um dadurch die Verriegelung des genannten Schneidedrahtes zu erzielen, wobei das Gehäuse innen mit integralen Druckfinger (12) mit einer oberen Schutzwand (4) des Gehäuses ausgestattet ist und ein Zurückschieben und Drehen des Nockens (9) zu ermöglichen, um den Druck desselben auf den Schneidedraht zu lösen, sobald das Außengehäuse und der Träger des Klemmmechanismus gleichgerichteten Druckkräfte ausgesetzt werden die obere Schutzwand des besagten Außengehäuses und die obere Fläche des Trägers des Spannmechanismus zusammenführt.

9. Multifunktionale rotierenden Schneidkopf nach den Ansprüchen 1 bis 8, **dadurch gekennzeichnet, dass** das Schneidmesser (5) zwischen den oberen und unteren Gehäuseteilen (1A, 1 B) eingefügt ist
- die untere Ebene des Elementeträgers oder Schneidwerkzeughalters wird durch einen Klingenträger (2) gebildet, wobei der Klingenträger und die Schneidklinge (5) mit komplementären Mitteln (2C, 5C, 6D) zur Positionierung und Drehkupplung des letzteren ausgebildet sind, wobei diese Mittel abkoppelbar sind, von ihrer aktiven Position durch gleichzeitige manuelle Ausführung einer gleichgerichteten axialen Relativbewegungen des besagten Gehäuse und des besagten Klingenträgers;
- komplementäre Mittel zur Axialsicherung der Schneidklinge auf dem distalen Abschnitt der Antriebswelle;
- eine automatische Kupplungseinrichtung des Klingenträgers und der Klinge, wenn die Klinge an dem Klingenträger angeordnet ist.

10. Multifunktionaler rotierender Schneidkopf nach den Ansprüchen 1 bis 9, **dadurch gekennzeichnet, dass** der zentrale Abschnitt der Klinge folgendes aufweist:
- auf einer Seite eine zentrale Öffnung (5A) für den Durchgang der Antriebswelle (6), zwei Kupplungsöffnungen (5F) auf jeder Seite der zentralen Öffnung, zwei Ausnehmungen (13) mit einer gekrümmten Außenkante (13a) vorgesehen sind und;
- auf der anderen Seite feste Teile das Eindrücken der Klinge an dem distalen Abschnitt der Drehwelle bis in ihre Verriegelungsstellung ermöglichen.

11. Multifunktionaler rotierender Schneidkopf nach den Ansprüchen 1 bis 10, **dadurch gekennzeichnet, dass** der Klingenträger (2) und der zentralen Abschnitt der Klinge so angeordnet sind, um die Installation der Klinge auf dem Klingenhalter durch eine relative gleichgerichtete Axialbewegung der letzten zu ermöglichen, gefolgt von einer Drehbewegung der Klinge; das Entfernen der Klinge erfolgt durch inverse Bewegungen.

12. Multifunktionaler rotierender Schneidkopf nach den Ansprüchen 1 bis 11, **dadurch gekennzeichnet, dass** die Mittel zum Positionieren und Koppeln der Schneideklinge mit dem Klingenhalter einerseits zwei Kupplungszapfen (14) umfassen, die auf einer Unterseite des besagten Klingenträgers auf jeder Seite der axialen Öffnung des letzteren angeordnet sind und, andererseits, zwei Öffnungen auf jeder Seite der axialen Öffnung (5B) der Klinge vorgesehen sind in der der distale Abschnitt der Antriebswelle (6) eingreift.

13. Multifunktionaler rotierender Schneidkopf nach den Ansprüchen 1 bis 12, **dadurch gekennzeichnet, dass** die Drehkopplung des internen Klingenträgers (2) und des Außengehäuses (1A) mit Hilfe von Mitnehmern (11) durchgeführt wird, die integral mit der Innenfläche einer oberen Wand des Gehäuses und parallel zu der Drehachse des Schneidkopfes nach innen davon ausgerichtet sind, wobei die Mitnehmer mit einer Gleitfähigkeit zum Eintauchen in die Nuten (R) in dem Klingenträger ausgebildet sind.

14. Multifunktionaler rotierender Schneidkopf nach den Ansprüchen 1 bis 13, **dadurch gekennzeichnet, dass** die Kupplungsnuten (R) in mindestens zwei der gegenüberliegenden Seiten des Klingenträgers (2) vorgesehen sind.

15. Multifunktionaler rotierender Schneidkopf nach den Ansprüchen 1 bis 14, **dadurch gekennzeichnet, dass** die Antriebswelle (6) durch einen axialen Durchgang (2A) in dem Klingenträger (2) ausgebildet ist und der Durchgangsabschnitt der Welle und der besagte axiale Durchgang ein komplementäre ausgebildetes Profil (2A, 6D) zur Ermöglichung des Drehantrieb des besagten Trägers besitzt.

16. Multifunktionaler rotierender Schneidkopf nach den Ansprüchen 1 bis 15 **dadurch gekennzeichnet, dass** der Schneidkopf Mittel (20) zur Begrenzung der Auslenkung der axialen Translationsbewegung des Klingenträgers auf dem Abschnitt der Antriebswelle (6).

17. Multifunktionale rotierenden Schneidkopf nach den Ansprüchen 1 bis 15, **dadurch gekennzeichnet, dass** der Schneidkopf Mittel zur Verriegelung des Klingenträgers an der Antriebswelle (6) aufweist.

18. Multifunktionaler rotierender Schneid kopf nach den Ansprüchen 1 bis 17, **dadurch gekennzeichnet, dass** die Mittel zur axialen Sicherung der Schneidklinge (5) an der Antriebswelle (6) einerseits eine axiale Öffnung (5A) umfassen, die das Schneidmesser aufweist und andererseits eine ringförmige Nut (6C), der den distalen Teil (6A) der Antriebswelle in einem Abstand von seinem Ende aufweist, wobei der Endabschnitt der genannten Antriebswelle ab der genannten Nut eine kreisförmige Form aufweist mit zwei weiblichen diametral gegenüberliegenden Längsrillen (6D), während die axiale Öffnung der Schneidklinge eine männliche Form (5C) identisch mit dem Profil des Endteils aufweist.

19. Multifunktionaler rotierender Schneidkopf nach den Ansprüchen 1 bis 18, **dadurch gekennzeichnet, dass** der untere Rand des Gehäuseoberteils und Schneidmesser mit komplementären Positionierungsmitteln versehen sind.

20. Multifunktionaler rotierender Schneidkopf nach den Ansprüchen 1 bis 19, **dadurch gekennzeichnet, dass** die komplementären Positionierungsmittel des Gehäuses und der Schneidklinge einerseits zwei Schlitze (13) umfassen, begrenzt durch eine bogenförmige Außenkante und angeordnet auf beiden Seiten und im gleichen Abstand von der diametralen Ausrichtung der Öffnungen, die die Klinge aufweisen und andererseits diametral gegenüberliegende Nasen (33) zur Führung und zum Stoppen, die basierend auf dem Oberteil bereitgestellt sind.

21. Multifunktionaler rotierender Schneidkopf nach den Ansprüchen 1 bis 20, **dadurch gekennzeichnet, dass** der untere Teil der Seitenwand des Gehäuses und der kreisförmige oberen Teil der Gleitplatte mit komplementären Haltemittel (15,16,17,18) versehen sind, dessen Anordnung nur eine axiale Relativbewegung der beiden Teile erfordert, gefolgt von einer Drehbewegung begrenzter Auslenkung, um die komplementären Elemente der genannten Haltemittel in Eingriff zu bringen.

22. Multifunktionaler rotierender Schneidkopf nach den Ansprüchen 1 bis 21, **dadurch gekennzeichnet, dass** die Gehäusebefestigungsmittel (1A) und die Schale (1 B) einerseits benachbart und entlang der kreisförmigen unteren Kante der Innenfläche der zylindrischen Seitenwand des Gehäuses zumindest zwei diametral gegenüberliegende gerundete Schultern (16) umfasst und sich andererseits zumindest zwei diametral gegenüberliegende Rastnasen (15) parallel zur Achse der Gleitplatte erstrecken, und dessen freies Ende mit einem Verriegelungstrichter oder einem Verriegelungszapfen (15A) ausgestattet ist, sich in der Richtung dieser Achse orientiert.

23. Multifunktionaler rotierender Schneidkopf nach Anspruch 22, **dadurch gekennzeichnet, dass** er einen Anschlag (16A) an einem Ende von jeder Schulter (16) aufweist, der die Drehbewegung des Verriegelungstrichters oder Verriegelungszapfens (15A) begrenzt, wenn sich die Gleitplatte in ihrer Montageposition befindet.

24. Multifunktionaler rotierender Schneidkopf nach den Ansprüchen 22 und 23, **dadurch gekennzeichnet, dass** die Kante des Trichters und der gerundeten Schultern der Trichter mit komplementären Verriegelungseinrichtung am Ende der Drehbewegung versehen sind, wenn die Gehäuseteile montiert sind.

25. Multifunktionaler rotierender Schneidkopf nach den Ansprüchen 22 bis 24, **dadurch gekennzeichnet, dass** die komplementären Verriegelungsmittel des unteren Teils mit dem oberen Teil des Gehäuses durch einen Zapfen (17) gebildet werden, welcher die obere Fläche der Schultern (16) und eine Kerbe (18), die in dem äußeren Rand des Trichters vorgesehen ist, in die sich automatisch am Ende der Drehfügebewegung der Sperrstift der Drehfügebewegung einfügt.

26. Tragbare Schneidegerät, wie ein Rasentrimmer oder Kantenschneider oder Freischneider oder Motortrimmer oder Heckenschere, **dadurch gekennzeichnet, dass** es mit einem rotierenden Schneidkopf gemäß einem der Ansprüche 1 bis 25, der wahlweise entweder einem Schneidedraht oder ein Schneidemesser verwendet.

## Claims

1. A multifunctional rotary cutting head (1) for cutting devices and for portable devices provided with such a cutting head, comprising a rotary housing formed by at least two parts (1A-1B), namely an upper part and a lower part which is assembled to the base of said upper part, and in which there is disposed with a capability of axial translatory movement of limited amplitude a support (2) for a cutting element(s) or tool(s) (3, 5) through which passes an axial drive shaft (6) which is fixed in respect of rotation to said support and the upper part of which is arranged to permit coupling thereof to the motor of a portable cutting device, said support for the cutting element(s) or tool(s) being mounted with the possibility of axial movement of limited amplitude on said axial drive shaft, the cutting head being **characterised in that** said support for the cutting element(s) or tool(s) is provided with two stages for the selective mounting of the latter, namely:
- a first stage arranged for mounting cutting wire strands (3), and
- a second stage arranged for mounting an interchangeable cutting blade (5).

2. A multifunctional rotary cutting head (1) for cutting devices according to claim 1 **characterised in that**:
- the first upper stage is arranged for mounting cutting wire strands (3), and
- the second lower stage is arranged for removably mounting an interchangeable cutting blade (5).

3. A multifunctional rotary cutting head according to claims 1 and 2 comprising means (8) for blocking or uncoupling the selected cutting element or elements (3, 5) which are so shaped that the simultaneous application of relative axial movements in the opposite direction to said external housing and to said support for the cutting element(s) or tool(s) causes: - either placement of the stage corresponding to the type of cutting element(s) chosen in a position permitting positioning or retraction of said element(s) (3, 5); - or blocking of the latter on the stage of said support corresponding to the type of cutting elements chosen.

4. A multifunctional rotary cutting head according to any one of claims 1 to 3 **characterised in that** the external housing (1) and the support (2) for the cutting element(s) or tool(s) (3, 5) are so arranged that the simultaneous application of convergent axial movements to said housing and to said support accommodated in the interior of the latter is used to permit placement of the stage corresponding to the type of cutting element (s) chosen in a position permitting positioning or retraction of said cutting element(s) while the simultaneous application of divergent axial movements to said housing and to said support permits automatic blocking of said cutting elements on the stage of the support corresponding to the type of cutting elements chosen.

5. A multifunctional rotary cutting head according to claims 1 to 4 **characterised in that** the relative convergent axial movements of the external housing (1) and the support (2) for the cutting element(s) or tool(s) (3, 5) are achieved automatically under the action of an elastic return means (7) so as to permit automatic blocking of the cutting elements or tools after their positioning in the cutting head.

6. A multifunctional rotary cutting head according to claim 5 **characterised in that** the elastic return means is formed by a spring (7) acting in compression and interposed between an internal partitioning (4) of the external housing and the internal support (2) for the cutting element(s) or tool(s).

7. A multifunctional rotary cutting head according to claims 1 to 6 **characterised in that** the upper stage of the support for the cutting element(s) or tool comprises a clamping mechanism (8, 9, 10) for the cutting strands (3) which are engaged in the interior of the external housing of the cutting head through orifices (1C) provided in the side wall (1D) thereof, which is fixed in respect of rotation with said clamping mechanism support comprises clamping cams (9) mounted with a capability of pivotal movement in planes parallel to each other and to the axis of rotation of the cutting head, said support for cutting elements or tools being mounted with a capability of axial translatory movement of limited amplitude in the external housing of the cutting head, the housing and the support (2) of the clamping mechanism being arranged in complementary relationship so that the simultaneous application of convergent axial movements to said housing and to said support is used to permit the clamping cams to be raised so as to allow introduction, sliding movement or positioning of the cutting strands (3) in the interior of the cutting head while the simultaneous application of divergent axial movements to said housing and to said support makes it possible to lower said cams so as to implement blocking in the active position of the cutting strands in the cutting head.

8. A multifunctional rotary cutting head according to claims 1 to 7 **characterised in that** the clamping mechanism (8) comprises two passages (2H) for guiding and positioning of the cutting strands (3), which are disposed in parallel relationship on respective sides of the axis of rotation of the cutting head facing the openings (1C) of the external housing, an entry portion of each of said passages is open and a pivotal cam (9) is mounted in facing relationship with said open portion, said cam being subjected to the action of a spring (10) tending to apply its clamping surface in the direction of said open portion so as to firmly press the cutting strand engaged in the positioning passage against the bottom of the latter, thereby ensuring blocking of said cutting strand, the housing is internally provided with thrust fingers (12) fixed with respect to an upper partitioning (4) of said housing and permitting the cam (9) to be pushed back and pivoted so as to remove the pressure thereof on the cutting strand when the external housing and the clamping mechanism support are subjected to convergent pressure forces tending to move the upper partitioning of the external housing and the upper face of the clamping mechanism support towards each other.

9. A multifunctional rotary cutting head according to claims 1 to 8 **characterised in that** the cutting blade (5) is inserted between the upper and lower parts of the housing (1A, 1B)
- the lower stage of the support for the cutting elements or tool is formed by a blade support (2), said blade support and the cutting blade (5) being provided with complementary means (2C, 5C, 6D) for positioning and rotational coupling of the latter, which means can be uncoupled from their active position by simultaneous manual application to said housing and to said blade support of relative convergent axial movements;
- complementary means for axial blocking of the cutting blade on the distal portion of the drive shaft; and
- a means for automatic coupling of the blade support and the blade when a blade is positioned on said blade support.

10. A multifunctional rotary cutting head according to claims 1 to 9 **characterised in that** the central part of the blade comprises:
- on the one hand a central opening (5A) for the passage of the drive shaft (6), two coupling orifices (5F) disposed on respective sides of said central opening, and two cut-outs (13) having a curved external edge (13A), and;
- on the other hand solid parts permitting the blade to be driven in on the distal part of the rotary shaft as far its locking position.

11. A multifunctional rotary cutting head according to claims 1 to 10 **characterised in that** the blade support (2) and the central part of the blade are arranged so as to permit installation of said blade on the blade support by a relative convergent axial movement of the latter, followed by a rotational movement of the blade; removal of the blade being effected by reversed movements,

12. A multifunctional rotary cutting head according to claims 1 to 11 **characterised in that** the means for positioning and coupling the cutting blade to the blade support comprise on the one hand two coupling studs (14) disposed underneath said blade support on respective sides of the axial opening provided in the latter and on the other hand two orifices on respective sides of the axial opening (5B) of the blade in which the distal portion of the drive shaft (6) is engaged.

13. A multifunctional rotary cutting head according to claims 1 to 12 **characterised in that** rotational coupling of the internal blade support (2) and the external housing (1A) is effected by means of drive fingers (11) fixed with respect to the internal face of an upper partitioning of the housing and oriented parallel to the axis of rotation of the cutting head towards the interior thereof, which drive fingers are engaged with a capability of sliding movement in grooves (R) provided in the blade support (2).

14. A multifunctional rotary cutting head according to claims 1 to 13 **characterised in that** the coupling grooves (R) are provided in at least two opposite sides of the blade support (2).

15. A multifunctional rotary cutting head according to claims 1 to 14 **characterised in that** the drive shaft (6) passes through an axial passage (2A) in the blade support (2) and the passing portion of the shaft and said axial passage have a complementary profile (2A, 6D) which is adapted to permit the support to be driven in rotation.

16. A multifunctional rotary cutting head according to claims 1 to 15 **characterised in that** said cutting head comprises means (20) for limiting the amplitude of the axial translatory movement of the blade support on the passing portion of the drive shaft (6).

17. A multifunctional rotary cutting head according to claims 1 to 15 **characterised in that** the cutting head comprises means for blocking the blade support on the drive shaft (6).

18. A multifunctional rotary cutting head according to claims 1 to 17 **characterised in that** the means permitting axial blocking of the cutting blade (5) on the drive shaft (6) comprise on the one hand an axial opening (5A) in the cutting blade and on the other hand an annular groove (6C) on the distal portion (6A) of the drive shaft, at a spacing from its end, the end portion of said drive shaft being from said groove of a circular shape provided with two diametrally opposite female longitudinal grooves (6D) while the axial opening of the cutting blade is of a male shape (5C) identical to that of the profile of said end portion.

19. A multifunctional rotary cutting head according to claims 1 to 18 **characterised in that** the lower edge of the upper part of the housing and the cutting blade are provided with complementary positioning means.

20. A multifunctional rotary cutting head according to claims 1 to 19 **characterised in that** the complementary means for positioning the housing and the cutting blade comprise on the one hand two apertures (13) delimited by an arcuate external edge and disposed on respective sides and at an equal spacing from the diametral alignment of openings in the blade and on the other hand diametrally opposite guide and stop pegs (33) with which the base of said upper part is provided.

21. A multifunctional rotary cutting head according to claims 1 to 20 **characterised in that** the low part of the side wall of the housing and the upper circular part of the sliding bowl are provided with complementary retaining means (15, 16, 17, 18), the assembly of which requires only a relative axial movement of the two parts followed by a rotary movement of limited amplitude permitting engagement of the complementary members of said retaining means.

22. A multifunctional rotary cutting head according to claims 1 to 21 **characterised in that** the retaining means of the housing (1A) and the bowl (1B) comprise on the one hand in the vicinity of and along the lower circular edge of the internal surface of the cylindrical side wall of the housing, at least two diametrally opposite rounded shoulders (16) and on the other hand at least two diametrally opposite latching tabs extending parallel to the axis of the sliding bowl and the free end of which is provided with a locking lug or projection (15A) oriented in the direction of said axis.

23. A multifunctional rotary cutting head according to claim 22 **characterised in that** it comprises an abutment (16A) disposed at one of the ends of each shoulder (16) for limiting the rotary movement of the locking lugs or projections (15A) when the sliding bowl is set in place in the assembly position.

24. A multifunctional rotary cutting head according to claims 22 and 23 **characterised in that** the edge of the projection and the rounded shoulder of the projections are provided with complementary locking means at the end of the rotary movement upon assembly of the parts of the housing.

25. A multifunctional rotary cutting head according to claims 22 to 24 **characterised in that** the complementary means for locking of the lower part on the upper part of the housing are formed by a pin (17) on the upper face of the shoulders (16) and by a notch (18) in the external edge of the projection, into which said locking pin automatically engages at the end of the rotary assembly movement.

26. A portable cutting device such as a grass cutter or edge cutter or shrub cutter or motorised scythe or hedge trimmer **characterised in that** it is equipped with a rotary cutting head using selectively either cutting strands or a cutting blade implemented according to any one of claims 1 to 25.
